# EUROPEAN PATENT SPECIFICATION

(11) **EP 3 637 181 B1**
(45) Date of publication and mention of the grant of the patent: **20.09.2023**
(21) Application number: 19202593.0
(22) Date of filing: 10.10.2019
(51) Int. Cl.: G02F 1/1343, G02F 1/1362, G02F 1/1337, G09G 3/36, G02F 1/139

(54) **ELECTRODE CONFIGURATION FOR A LIQUID CRYSTAL DISPLAY**
ELEKTRODENKONFIGURATION FÜR EINE FLÜSSIGKRISTALLANZEIGE
CONFIGURATION D'ÉLECTRODE POUR UN AFFICHAGE À CRISTAUX LIQUIDES

(30) Priority: 11.10.2018 KR 20180121117
(43) Date of publication of application: 15.04.2020
(73) Proprietor: Samsung Display Co., Ltd., Gyeonggi-do 17113 (KR)
(72) Inventor: KIM, Kwi Hyun, Gyeonggi-Do (KR); CHOI, Kook Hyun, Chungcheongnam-do (KR); KANG, Woo Gun, Incheon (KR); PARK, Kyung Won, Seoul (KR); RYU, Gwon-Heon, Chungcheongnam-do (KR)
(74) Representative: Taor, Simon Edward William

(56) References cited:
- US-A1- 2017 038 655
- US-A1- 2018 095 333
- US-A1- 2018 203 319

## Description

Exemplary embodiments of the invention relate generally to a display device and, more specifically, to a liquid crystal display with improved display quality.

Liquid crystal displays are widely used as a display device. A liquid crystal display includes two display panels and a liquid crystal layer disposed between field electrodes, such as a pixel electrode and a common electrode. In general, the voltage applied to field electrodes of a liquid crystal display to generate an electric field in the liquid crystal layer determines the inclination direction of liquid crystal molecules of the liquid crystal layer, and an image is displayed by controlling the polarization of incident light.

However, wires transmitting signals, such as a data voltage, may affect the electric field in the liquid crystal layer and deteriorate the display quality of the display device. The influence from the wires may be greater when more wires and electrodes are disposed in a limited region of the display device, such as a display device having a higher resolution.

US 2018/095333 relates to a pixel structure for a liquid crystal display and discloses all the features of the preamble of the independent claims.

US 2018/203319 relates to a display device.

US 2017/038655 relates to a substrate for a liquid crystal display panel.

The above information disclosed in this Background section is only for enhancement of understanding of the background of the invention and therefore it may contain information that does not form the prior art that is already known in this country to a person of ordinary skill in the art.

Applicant discovered that the adverse effects caused by reducing the spacing between data wires and electrodes in a liquid crystal display, such as an undesired increase in pixel luminance, can be reduced or eliminated by shielding the liquid crystal layer from the electric field caused by activation of closely spaced data wires and electrodes.

Accordingly, display devices constructed according to exemplary embodiments of the invention are capable of suppressing the increase in luminance from a data field to thereby improve the display quality of the display device.

According to an aspect of the invention, there is provided a display device as set out in claim 1. According to another aspect of the invention, there is provided a display device as set out in claim 9.

A display device according to an exemplary embodiment includes a first pixel electrode including a first electrode part having a first slit and a second electrode part having a second slit, and a first data line and a second data line, the first and second data lines being adjacent to each other in a first direction, wherein the first pixel electrode overlaps the first data line and the second data line, wherein the first electrode part and the first slit overlap the first data line, and the second electrode part and the second slit overlap the second data line, and a first area defined by a first overlapping region between the first slit and the first data line is different from a second area defined by a second overlapping region between the second slit and the second data line.

The first slit has a first width and the second slit has a second width different from the first width.

The first data line is electrically connected to the first pixel electrode, and the first width of the first slit is less than the second width of the second slit.

The first slit includes a first slit portion having the first width and a second slit portion having a third width greater than the first width, and the first slit portion overlaps the first data line.

The display device may further include a second pixel electrode adjacent to the first pixel electrode in a second direction intersecting the first direction, in which the second data line is electrically connected to the second pixel electrode.

The second pixel electrode may include a first electrode part and a second electrode part respectively aligned with the first electrode part and the second electrode part of the first pixel electrode in the second direction, and in the second pixel electrode, the first electrode part may include a first slit, the second electrode part may include a second slit, and a width of the second slit may be less than a width of the first slit.

The display device may further include a gate line extending substantially in the first direction, in which the gate line may include a first sub-gate line electrically connected to the first pixel electrode and a second sub-gate line electrically connected to the second pixel electrode.

According to another exemplary embodiment, the first pixel electrode includes a transverse stem part, a longitudinal stem part intersecting the transverse stem part, and a plurality of branch parts extending from the transverse stem part or the longitudinal stem part, and the first electrode part is disposed at one side of the longitudinal stem part, and the second electrode part is disposed at the other side of the longitudinal stem part.

The first slit and the second slit maybe spaced at an interval between adjacent branch parts of the plurality of branch parts.

The first slit and the second slit are disposed symmetrically with respect to the longitudinal stem part.

The first data line and the second data line may be configured to transmit data voltages having different polarities from each other during one frame.

A first acute angle defined between the extending direction of the first slit and a second direction intersecting the first direction is different from a second acute angle defined between the extending direction of the second slit and the second direction.

The first data line is electrically connected to the first pixel electrode, and the first acute angle is greater than the second acute angle.

The display device may further include a second pixel electrode adjacent to the first pixel electrode in a second direction intersecting the first direction, in which the second data line may be electrically connected to the second pixel electrode, the second pixel electrode may include a first electrode part and a second electrode part respectively aligned with the first electrode part and the second electrode part of the first pixel electrode in the second direction, and in the second pixel electrode, the first electrode part may include a first slit, the second electrode part may include a second slit, and a third acute angle defined between the extending direction of the second slit and the second direction may be greater than a fourth acute angle defined between the extending direction of the first slit and the second direction.

A display device according to an example which is not an embodiment includes a gate line extending in a first direction, a first transistor and a second transistor electrically connected to the gate line, a pixel electrode including a first subpixel electrode including a first slit and a second slit, and being electrically connected to the first transistor, and a second subpixel electrode including a third slit and a fourth slit, and being electrically connected to the second transistor, and a first data line and a second data line overlapping the first subpixel electrode and the second subpixel electrode and extending substantially in a second direction intersecting the first direction, in which the first data line overlaps the first slit and the third slit, the second data line overlaps the second slit and the fourth slit, a first area defined by a first overlapping region between the first slit and the first data line is different from a second area defined by a second overlapping region between the second slit and the second data line, and a third area defined by a third overlapping region between the third slit and the first data line is different from a fourth area defined by a fourth overlapping region between the fourth slit and the second data line.

A width of the first slit may be different from a width of the second slit, and a width of the third slit is different from a width of the fourth slit.

The first data line may be electrically connected to the first subpixel electrode and the second subpixel electrode, the width of the first slit may be less than the width of the second slit, and the width of the third slit may be less than the width of the fourth slit.

The first data line may be electrically connected to the first subpixel electrode, and the second data line may be electrically connected to the second subpixel electrode, and the width of the first slit may be less than the width of the second slit, and the width of the fourth slit may be less than the width of the third slit.

A first acute angle defined between the extending direction of the first slit and the second direction may be different from a second acute angle defined between the extending direction of the second slit and the second direction, and a third acute angle defined between the extending direction of the third slit and the second direction may be different from a fourth acute angle defined between the extending direction of the fourth slit and the second direction.

The first data line may be electrically connected to the first subpixel electrode and the second subpixel electrode, and the first acute angle may be greater than the second acute angle, and the third acute angle may be greater than the fourth acute angle.

The first data line may be electrically connected to the first subpixel electrode, the second data line may be electrically connected to the second subpixel electrode, and the first acute angle may be greater than the second acute angle, and the fourth acute angle may be greater than the third acute angle.

According to an aspect, there is provided a display device as set out in claim 1 or claim 9. Additional features are set out in claims 2 to 8 and 10.

According to the principles of the invention and exemplary embodiments, a luminance change due to a data field formed by the data line overlapping the pixel electrode may be suppressed, thereby improving display quality of the display device.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the inventive concepts.
FIG. 1 is a schematic layout view of a display device constructed according to an exemplary embodiment of the invention.
FIG. 2 is a top layout view of two pixels of a display device constructed according to an example which is not falling under the scope of the claimed invention.
FIG. 3 is a top plan view of a pixel electrode and data lines of FIG. 2.
FIG. 4 is a cross-sectional view taken along line IVa-IVb of the display device of FIG. 2.
FIG. 5 is a schematic view exemplarily illustrating the influence of a data field in a display device according to the principles of the invention.
FIG. 6 is a schematic view exemplarily illustrating the relation of a slit of a pixel electrode and a data line in a display device according to the principles of the invention.
FIG. 7 is a top layout view of four adjacent pixels of a display device constructed according to an example which is not falling under the scope of the claimed invention.
FIG. 8 is a top plan view of a pixel electrode and data lines of a display device of FIG. 7 according to an exemplary embodiment.
FIG. 9 is a top layout view of one pixel of a display device of FIG. 7 according to an exemplary embodiment.
FIG. 10 is a top plan view of the pixel electrode and data lines of FIG. 9.
FIG. 11 is a schematic view exemplarily illustrating the relationship of a slit of a pixel electrode and a data line in a display device.
FIG. 12 is a top layout view of one pixel of a display device according to an example which is not falling under the scope of the claimed invention.
FIG. 13 is an equivalent circuit diagram of a representative pixel of FIG. 12.
FIG. 14 is a top layout view of one pixel of a display device according to an exemplary embodiment.
FIG. 15 is a top layout view of one pixel of a display device according to an example which is not falling under the scope of the claimed invention.
FIG. 16 is an equivalent circuit diagram of a representative pixel of FIG. 15.
FIG. 17 is a top layout view of one pixel of a display device according to an exemplary embodiment.

### DETAILED DESCRIPTION

In the following description, for the purposes of explanation, numerous specific details are set forth in order to provide a thorough understanding of various exemplary embodiments or implementations of the invention. As used herein "embodiments" and "implementations" are interchangeable words that are nonlimiting examples of devices or methods employing one or more of the inventive concepts disclosed herein. It is apparent, however, that various exemplary embodiments may be practiced without these specific details or with one or more equivalent arrangements. In other instances, well-known structures and devices are shown in block diagram form in order to avoid unnecessarily obscuring various exemplary embodiments. Further, various exemplary embodiments may be different, but do not have to be exclusive. For example, specific shapes, configurations, and characteristics of an exemplary embodiment may be used or implemented in another exemplary embodiment without departing from the inventive concepts.

Unless otherwise specified, the illustrated exemplary embodiments are to be understood as providing exemplary features of varying detail of some ways in which the inventive concepts may be implemented in practice. Therefore, unless otherwise specified, the features, components, modules, layers, films, panels, regions, and/or aspects, etc. (hereinafter individually or collectively referred to as "elements"), of the various embodiments may be otherwise combined, separated, interchanged, and/or rearranged without departing from the inventive concepts.

The use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified. Further, in the accompanying drawings, the size and relative sizes of elements may be exaggerated for clarity and/or descriptive purposes. When an exemplary embodiment may be implemented differently, a specific process order may be performed differently from the described order. For example, two consecutively described processes may be performed substantially at the same time or performed in an order opposite to the described order. Also, like reference numerals denote like elements.

When an element, such as a layer, is referred to as being "on," "connected to," or "coupled to" another element or layer, it may be directly on, connected to, or coupled to the other element or layer or intervening elements or layers may be present. When, however, an element or layer is referred to as being "directly on," "directly connected to," or "directly coupled to" another element or layer, there are no intervening elements or layers present. To this end, the term "connected" may refer to physical, electrical, and/or fluid connection, with or without intervening elements. Further, the D1-axis, the D2-axis, and the D3-axis are not limited to three axes of a rectangular coordinate system, such as the x, y, and z - axes, and may be interpreted in a broader sense. For example, the D1-axis, the D2-axis, and the D3-axis may be perpendicular to one another, or may represent different directions that are not perpendicular to one another. For the purposes of this disclosure, "at least one of X, Y, and Z" and "at least one selected from the group consisting of X, Y, and Z" may be construed as X only, Y only, Z only, or any combination of two or more of X, Y, and Z, such as, for instance, XYZ, XYY, YZ, and ZZ. As used herein, the term "and/or" includes any and all combinations of one or more of the associated listed items.

Although the terms "first," "second," etc. may be used herein to describe various types of elements, these elements should not be limited by these terms. These terms are used to distinguish one element from another element. Thus, a first element discussed below could be termed a second element without departing from the teachings of the disclosure.

Spatially relative terms, such as "beneath," "below," "under," "lower," "above," "upper," "over," "higher," "side" (e.g., as in "sidewall"), and the like, may be used herein for descriptive purposes, and, thereby, to describe one elements relationship to another element(s) as illustrated in the drawings. Spatially relative terms are intended to encompass different orientations of an apparatus in use, operation, and/or manufacture in addition to the orientation depicted in the drawings. For example, if the apparatus in the drawings is turned over, elements described as "below" or "beneath" other elements or features would then be oriented "above" the other elements or features. Thus, the exemplary term "below" can encompass both an orientation of above and below. Furthermore, the apparatus may be otherwise oriented (e.g., rotated 90 degrees or at other orientations), and, as such, the spatially relative descriptors used herein interpreted accordingly.

The terminology used herein is for the purpose of describing particular embodiments and is not intended to be limiting. As used herein, the singular forms, "a," "an," and "the" are intended to include the plural forms as well, unless the context clearly indicates otherwise. Moreover, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. It is also noted that, as used herein, the terms "substantially," "about," and other similar terms, are used as terms of approximation and not as terms of degree, and, as such, are utilized to account for inherent deviations in measured, calculated, and/or provided values that would be recognized by one of ordinary skill in the art.

Unless otherwise defined, all terms (including technical and scientific terms) used herein have the same meaning as commonly understood by one of ordinary skill in the art to which this disclosure is a part. Terms, such as those defined in commonly used dictionaries, should be interpreted as having a meaning that is consistent with their meaning in the context of the relevant art and should not be interpreted in an idealized or overly formal sense, unless expressly so defined herein.

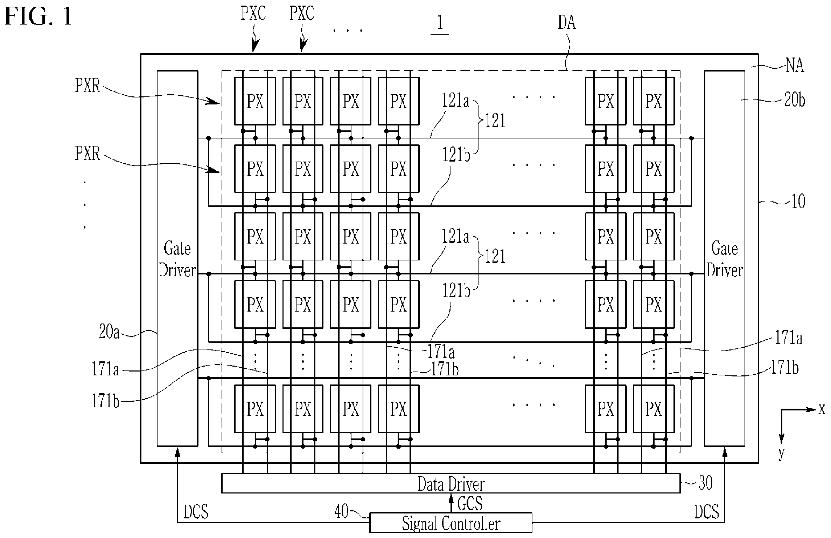

FIG. 1 is a schematic layout view of a display device constructed according to an exemplary embodiment of the invention.

Referring to FIG. 1, the display device 1 includes a display panel 10, gate drivers 20a and 20b, and a data driver 30. The display device 1 also includes a signal controller 40 controlling the gate drivers 20a and 20b and the data driver 30, and may further include a backlight unit for providing light to the display panel 10.

The display panel 10 includes a display area DA, and a non-display area NA around the display area DA. The display area DA is a region corresponding to a screen in which an image is displayed and pixels PX, gate lines 121, and data lines 171a and 171b are arranged.

The pixel PX may be a basic unit configuring the screen. Each pixel PX may display a color and a contrast thereof, and the pixels PX may be combined to display an image. The pixels PX may be arranged in a substantially matrix form. As used herein, a group of the pixels PX arranged in a row direction are referred to as a pixel row PXR, and a group of the pixels PX arranged in a column direction are referred to as a pixel column PXC. The row direction corresponds to a first direction "x", and the column direction corresponds to a second direction "y" crossing the first direction "x".

Each pixel PX includes at least one switching element electrically connected to the gate line 121 and the data lines 171a and 171b, and at least one pixel electrode connected thereto. As used herein, the term "electrically connected to" refers to an element making an electrical connection to another element directly or indirectly, such as through a switching element. The switching element may be an electronic element, such as a transistor integrated in the display panel 10, which may include a gate terminal, an input terminal, and an output terminal. The switching element may be turned on or off according to the gate signal of the gate line 121 to selectively transmit the data voltage from the data lines 171a and 171b to the pixel electrode. The pixel PX may display a predetermined gray level depending on the data voltage applied to the pixel electrode.

Each pixel PX may represent one of primary colors. The primary colors may be three primary colors of, for example, red, green, and blue, and may further include white in some exemplary embodiments. The pixels PX of each pixel column PXC may display the same primary color. The pixels PX of each pixel row PXR may represent the same primary color, or four adjacent pixels PX arranged in a substantially rectangular shape may display two or more different primary colors.

The gate line 121 may transmit gate signals, such as a gate-on voltage and a gate-off voltage. Each gate line 121 may extend substantially in the first direction x, and the gate lines 121 may be arranged substantially in the second direction y.

The gate line 121 transmitting a gate signal may include a first sub-gate line 121a and a second sub-gate line 121b electrically connected to each other. Each of the first and second sub-gate lines 121a and 121b may entirely extend substantially in the first direction x, and the first sub-gate line 121a and the second sub-gate line 121b may be substantially parallel to each other in the display area DA. The first sub-gate line 121a and the second sub-gate line 121b are arranged substantially in the second direction y. The first sub-gate line 121a and the second sub-gate line 121b in one gate line 121 may be electrically connected to pixels PX of two pixel rows PXR different from each other. For example, the two different pixel rows PXR may be pixel rows PXR adjacent in the second direction y. The first sub-gate line 121a and the second sub-gate line 121b included in one gate line 121 may be connected to each other near the right/left edge of the display area DA or in the non-display area NA to transmit the same gate signal.

The data lines 171a and 171b may transmit a data voltage corresponding to an image signal input to the display device. Each data line 171a and 171b may extend substantially in a second direction y, and the data lines 171a and 171b may be arranged substantially in a first direction x.

A pair of data lines 171a and 171b may be arranged for each pixel column PXC. A pair of data lines 171a and 171b corresponding to one pixel column PXC may traverse the pixels PX of the corresponding pixel column PXC, and may overlap the pixel electrode. A pair of data lines 171a and 171b includes a first data line 171a and a second data line 171b. The first data line 171a and the second data line 171b may transmit data voltages of different polarities. For example, the first data line 171a may transmit the data voltage of a positive polarity, and the second data line 171b may transmit the data voltage of a negative polarity. As used herein, the "positive polarity" refers to a voltage higher than a common voltage, and the "negative polarity" refers to a voltage lower than the common voltage. The polarity of the data voltage transmitted through the first data line 171a and the second data line 171b may vary from frame to frame. The first data line 171a and the second data line 171b may be alternately arranged in the first direction x. Alternatively, the first data lines 171a may be adjacent to each other, or the second data lines 171b may be adjacent to each other, in the pairs of the data lines 171a and 171b adjacent to each other in the first direction x.

A pair of data lines 171a and 171b corresponding to one pixel column PXC are electrically connected to the pixels PX thereof. More specifically, in one pixel column PXC, two pixels PX that are respectively and electrically connected to the first sub-gate line 121a and the second sub-gate line 121b of one gate line 121 may be electrically connected to a different one of a pair of data lines 171a and 171b, respectively. For example, in each pixel column PXC, the pixels PX arranged in the second direction y may each be electrically connected to one of a pair of data lines 171a and 171b in an alternating sequence, as shown in FIG.1. As another example, the pixels PX of the odd-numbered pixel columns PXC may be electrically connected to the first data line 171a, and the pixels PX of the even-numbered pixel columns PXC may be electrically connected to the second data line 171b. However, embodiments of the inventive concept are not limited thereto. For example, the pixels PX of the odd-numbered pixel columns PXC may be electrically connected to the second data line 171b, and the pixels PX of the even-numbered pixel columns PXC may be electrically connected to the first data line 171a. Accordingly, in one pixel column PXC, adjacent pixels PX connected to one gate line 121 may receive the data voltage with different polarities through the data lines 171a and 171b at the same time (e.g., in the same frame).

In the display panel 10 including the pixels PX, the gate lines 121, and the data lines 171a and 171b, which are arranged and connected as described above, the number of gate lines 121 may be approximately half the number of all pixel rows PXR, and the number of data lines 171a and 171b may be approximately twice the number of all pixel columns PXC in some exemplary embodiments.

The gate drivers 20a and 20b and the signal lines for transmitting various signals applied to the display area DA and the gate drivers 20a and 20b are disposed in the non-display area NA. The gate drivers 20a and 20b are connected to the gate lines 121, and may receive a control signal GCS from the signal controller 40 to generate a gate signal and apply the gate signal to the gate lines 121. The gate drivers 20a and 20b may include a first gate driver 20a and a second gate driver 20b disposed on respective sides of the display area DA. Each of the gate drivers 20a and 20b may include stages arranged substantially in the second direction y, and each stage may be connected to each gate line 121 to transmit the gate signal. The stages may sequentially output a gate signal in the second direction y or in a direction opposite to the second direction y. In some exemplary embodiments, one of the two gate drivers 20a and 20b may be omitted. The gate drivers 20a and 20b may be integrated in the non-display area NA of the display panel 10 along with other electrical components, such as the transistors in the display area, through substantially the same process.

The data driver 30 is connected with the data lines 171a and 171b. The data driver 30 may receive a control signal DCS and image data from the signal controller 40, convert the image data to a data voltage by using a gray voltage generated by a gray voltage generator, and transmit the data voltage to the data lines 171a and 171b. The data driver 30 may be mounted in a form of an integrated circuit chip on a flexible printed circuit film or a printed circuit board (PCB) that is electrically connected to the display panel 10, or may be mounted on the non-display area NA of the display panel 10.

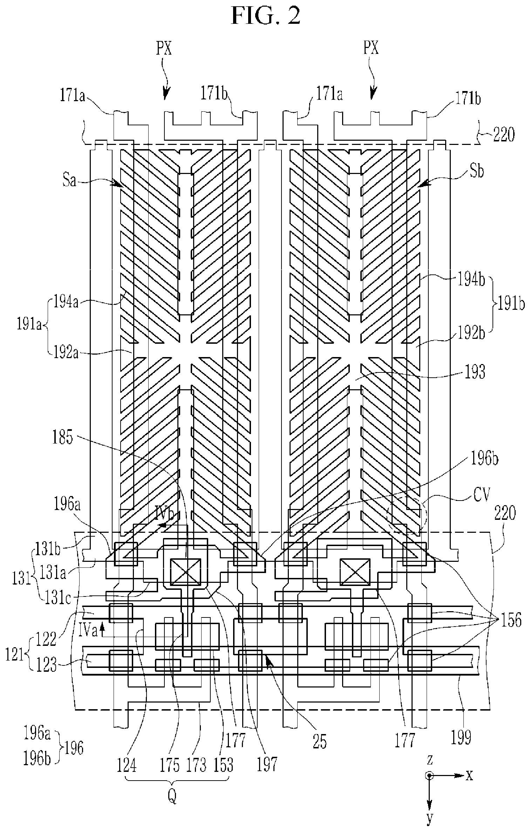

Next, the detailed structure of the display device according to an example, which is not falling under the scope of the claimed invention, will be described with reference to FIG. 2 to FIG. 6 along with FIG. 1.

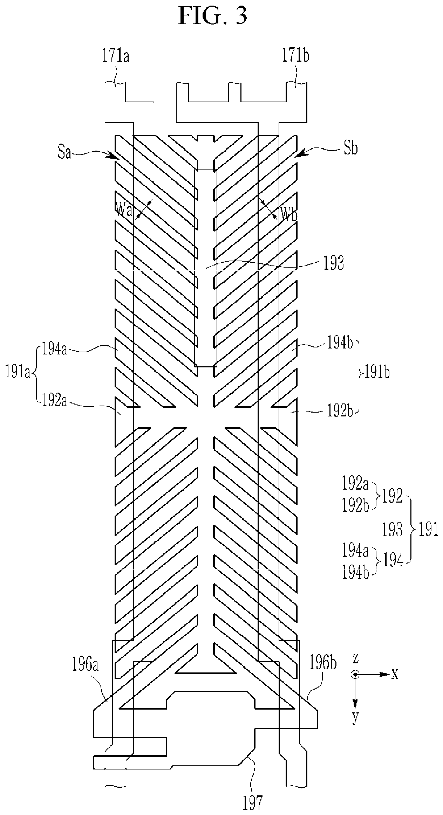

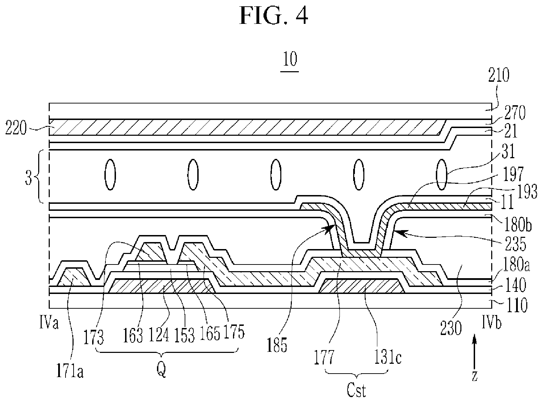

FIG. 2 is a top layout view of two pixels of a display device constructed according to an example. FIG. 3 is a top plan view of a pixel electrode and data lines of FIG. 2. FIG. 4 is a cross-sectional view taken along line IVa-IVb of the display device of FIG. 2.

Referring to FIGS. 1 to 4, the display panel 10 of the display device 1 according to an exemplary embodiment includes a first substrate 110 and a second substrate 210 facing each other, and a liquid crystal layer 3 disposed between the first substrate 110 and the second substrate 210.

On the first substrate 110, a gate conductive layer including a gate line 121, a gate electrode 124, and a storage electrode line 131 may be disposed. The gate conductive layer may include metal, such as molybdenum (Mo), copper (Cu), aluminum (Al), magnesium (Mg), silver (Ag), gold (Au), platinum (Pt), palladium (Pd), nickel (Ni), neodymium (Nd), iridium (Ir), tungsten (W), titanium (Ti), chromium (Cr), tantalum (Ta), and alloys thereof.

One gate line 121 may include a pair of line portions 122 and 123. A pair of line portions 122 and 123 may extend substantially in parallel to each other in the first direction x. The gate electrodes 124 are disposed between a pair of line portions 122 and 123, and the gate electrodes 124 may be directly connected to a pair of line portions 122 and 123. In this manner, a pair of line portions 122 and 123 may be electrically connected to each other by the gate electrodes 124, and may transmit the same gate signal as each other. An opening 25 is formed in the gate line 121 between two neighboring gate electrodes 124 in the first direction x. As such, a pair of line portions 122 and 123 of the gate line 121 may face and be substantially parallel with each other across the openings 25 in a region where the gate electrodes 124 are not disposed.

The storage electrode line 131 is spaced apart from the gate line 121 and the gate electrode 124 in a plan view. The storage electrode line 131 may transmit a constant voltage, such as a common voltage. The storage electrode line 131 may include a main line 131a extending substantially in the first direction x, extensions 131b substantially extending in the second direction y and connected to the main line 131a, and extension portions 131c extending from a portion of the main line 131a. A pitch of the extensions 131b connected to the main line 131a in the first direction x and a pitch of the extension portions 131c in the first direction x may be substantially the same as the pitch of the pixels PX in the first direction x.

A first insulating layer 140 may be disposed on the gate conductive layer. The first insulating layer 140 may include an inorganic insulating material, such as a silicon oxide (SiOx), a silicon nitride (SiNx), and the like. Hereinafter, the first insulating layer 140 may also be referred to as a gate insulating layer.

A semiconductor layer including semiconductors 153 and 156 are disposed on the first insulating layer 140. The semiconductor layer may include amorphous silicon, polysilicon, or an oxide semiconductor material. The semiconductor 153 may substantially overlap the gate electrode 124 in a plan view.

Ohmic contact layers 163 and 165 may be disposed on the semiconductor 153. When the semiconductor layer include silicon in some exemplary embodiments, the ohmic contact layers 163 and 165 may include a material, such as n+ hydrogenated amorphous silicon, in which an n-type impurity such as a phosphor is doped at a high density, or a silicide. In some exemplary embodiments, the ohmic contact layers 163 and 165 may be omitted.

A data conductive layer including data lines 171a and 171b, a source electrode 173, and a drain electrode 175, may be disposed on the ohmic contact layers 163 and 165 and the first insulating layer 140. The data conductive layer may include metal, such as aluminum (Al), copper (Cu), magnesium (Mg), silver (Ag), gold (Au), platinum (Pt), palladium (Pd), nickel (Ni), neodymium (Nd), iridium (Ir), molybdenum (Mo), tungsten (W), titanium (Ti), chromium (Cr), tantalum (Ta), and alloys thereof.

The data lines 171a and 171b extend substantially in the second direction y and may intersect the gate line 121. The data lines 171a and 171b may include a curved portion CV, and the curved portion CV may include a portion extending substantially in the first direction x and a portion extending substantially in the second direction y. One of the data lines 171a and 171b may be directly connected with the source electrodes 173. The source electrode 173 may extend from one of the data lines 171a and 171b toward the gate electrode 124 and may have a substantially "U" shape. The drain electrode 175 may include a portion that faces the source electrode 173 in a region overlapping with gate electrode 124, and an extension portion 177. The extension portion 177 may be disposed above the gate line 121 and the gate electrode 124 in a plan view. Most of the region between the drain electrode 175 and the source electrode 173 facing each other may overlap the semiconductor 153.

In a plan view, the extension portion 177 may overlap the extension portion 131c of the storage electrode line 131. The extension portion 177 overlaps the extension portion 131c of the storage electrode line 131 via the first insulating layer 140 interposed therebetween to form a storage capacitor Cst. The storage capacitor Cst may maintain the voltage applied to the drain electrode 175 and a pixel electrode 191 connected thereto when no data voltage is applied to the data lines 171a and 171b.

The gate electrode 124, the source electrode 173, and the drain electrode 175 form a transistor Q, which may function as a switching element, together with the semiconductor 153. The channel of the transistor Q is formed in the semiconductor 153 between the source electrode 173 and the drain electrode 175. One pixel PX may be electrically connected to at least one of the first data line 171a and the second data line 171b by the transistor Q. FIG. 2 exemplarily shows that the pixel PX is connected to the first data line 171a.

The openings 25 in the gate line 121 overlap the data lines 171a and 171b in a planar view to reduce a signal delay due to coupling between the gate line 121 and the data lines 171a and 171b. Each semiconductor 156 may be disposed in a portion where the gate line 121, the gate electrode 124, or the storage electrode line 131, and the data lines 171a and 171b, are intersected, to prevent an electrical short between the gate conductive layer and the data conductive layer.

In an exemplary embodiment, the ohmic contact layers 163 and 165 may be only formed between the underlying semiconductor 153 and the data conductive layer thereon to reduce the contact resistance therebetween. The semiconductor 153 may have a portion that is not covered by the data conductive layer, such as a portion between the source electrode 173 and the drain electrode 175.

A second insulating layer 180a may be disposed on the data conductive layer, and a third insulating layer 180b may be disposed on the second insulating layer 180a. The second insulating layer 180a and the third insulating layer 180b may include the inorganic insulating material and/or the organic insulating material. The second insulating layer 180a and the third insulating layer 180b include a contact hole 185 overlapping the extension portion 177 of the drain electrode 175.

A color filter layer 230 may be disposed between the second insulating layer 180a and the third insulating layer 180b. The color filter layer 230 includes color filters having different colors, and each color filter may include a pigment that has the color represented by the corresponding pixel PX. The third insulating layer 180b may prevent a material of the color filter layer 230 from penetrating into the liquid crystal layer 3. The color filter layer 230 may include an opening 235 overlapping the contact hole 185 of the second insulating layer 180a and the third insulating layer 180b. The contact hole 185 may be disposed in the opening 235.

In a plan view, two adjacent color filter layers 230 may partially overlap each other at the boundary between the pixels PX. More particularly, when each color filter layer 230 extends along each pixel column PXC, and one color filter layer 230 is disposed on one pixel column PXC, two color filter layers 230 may be partially overlapped with each other between the adjacent pixel columns PXC, and the region where two color filter layers 230 overlaps may overlap the extension 131b of the storage electrode line 131.

A pixel electrode layer including a pixel electrode 191 and a shielding electrode 199 may be disposed on the third insulating layer 180b. The pixel electrode layer may include a transparent conductive material, such as ITO (indium tin oxide) and IZO (indium zinc oxide), or aluminum, silver, chromium, or alloys thereof.

Referring to FIG. 2 and FIG. 3, the pixel electrode 191 may have a substantially quadrangular shape with patterns formed therein. The pixel electrode 191 includes a transverse stem part 192, a longitudinal stem part 193, and branch parts 194. An extension 196 and an extension portion 197 may be connected to the pixel electrode 191.

The transverse stem part 192 extends substantially in the first direction x, and the longitudinal stem part 193 extends substantially in the second direction y. The transverse stem part 192 includes a first transverse stem part 192a and a second transverse stem part 192b disposed on the left and right sides of the longitudinal stem part 193, respectively. The second transverse stem part 192b protrudes from the longitudinal stem part 193 substantially in the first direction x, and the first transverse stem part 192a protrudes from the longitudinal stem part 193 substantially in a direction opposite to the first direction x. The pixel electrode 191 may be divided into four sub-regions by the transverse stem part 192 and the longitudinal stem part 193. When the electric field is applied, the liquid crystal molecules 31 of the liquid crystal layer 3 in the four sub-regions may be inclined in different directions from each other, thus realizing a wide viewing angle.

The width of the longitudinal stem part 193 in the first direction x may be substantially constant or may vary along the second direction y. The width of the transverse stem part 192 in the second direction y may be substantially constant or may vary along the first direction x.

The branch parts 194 are disposed in four sub-regions and are connected to the transverse stem part 192 or the longitudinal stem part 193. The branch parts 194 may extend substantially in an oblique direction with respect to the first direction x and the second direction y, and from an acute angle of about 30° to about 60°, about 40° to about 50°, or about 45° with the first direction x or the second direction y. The branch parts 194 include first branch parts 194a and second branch parts 194b disposed on the left and right sides of the longitudinal stem part 193, respectively. The first branch parts 194a and the second branch parts 194b, which face each other via the longitudinal stem part 193 therebetween, extend in different directions. The extending direction of the first branch parts 194a and the extending direction of the second branch parts 194b may be substantially symmetrical with respect to the longitudinal stem part 193.

A first slit Sa, which is the spacing slit, is disposed between neighboring first branch parts 194a. A second slit Sb is disposed between neighboring second branch parts 194b. The first slit Sa and the second slit Sb may have a substantially parallelogramical shape, respectively. In a plan view, when the portion of the pixel electrode 191 disposed on the left of the longitudinal stem part 193 is referred to as a first electrode part 191a, the first electrode part 191a includes a first transverse stem part 192a and first branch parts 194a, and the first slits Sa are formed on the first electrode part 191a. When the portion of the pixel electrode 191 disposed on the right of the longitudinal stem part 193 is referred to as a second electrode part 191b, the second electrode part 191b includes a second transverse stem part 192b and second branch parts 194b, and the second slits Sb are formed on the second electrode part 191b. The first electrode part 191a overlaps the first data line 171a and the second electrode part 191b overlaps the second data line 171b. Also, the first slits Sa overlap the first data line 171a and the second slits Sb overlap the second data line 171b.

A first width Wa of the first slits Sa is different from a second width Wb of the second slits Sb. As used herein, the first width Wa refers to the width measured in a direction substantially perpendicular to the extending direction of the first slit Sa. The extending direction of the first slit Sa may be substantially parallel to the extending direction of the neighboring first branch parts 194a interposing the first slit Sa. Similarly, the second width Wb refers to the width measured in a direction substantially perpendicular to the extending direction of the second slit Sb, and the extending direction of the second slit Sb may be substantially parallel to an extending direction of the neighboring second branch parts 194b interposing the second slit Sb. According to an exemplary embodiment, the width of the first branch parts 194a may be different from the width of the second branch parts 194b. For the longitudinal stem part 193, the first electrode part 191a and the second electrode part 191b may have a substantially symmetrical shape, except that the first width Wa of the first slits Sa and the second width Wb of the second slits Sb are different. The first slits Sa and the second slits Sb may be substantially symmetric with respect to the longitudinal stem part 193, except that the first width Wa and the second width Wb are different. However, embodiments of the inventive concept are not limited thereto. For example, in some exemplary embodiments, the first slits Sa and the second slits Sb may be asymmetric with respect to the longitudinal stem part 193. The first width Wa of the first slits Sa may be substantially constant in the first electrode part 191a, and may be different depending on the position. The second width Wb of the second slits Sb may be substantially constant in the second electrode part 191b, and may be different depending on the position. The first width Wa and the second width Wb may be formed differently from each other to reduce the overlapping area between the slit and the data line, thereby suppressing the increase of the luminance due to the data field, which will be described in more detail below.

The extension 196 includes a first extension 196a and a second extension 196b connected to the first electrode part 191a and the second electrode part 191b, respectively. The first extension 196a may extend from the first branch part 194a of first electrode part 191a, and the second extension 196b may extend from the second branch part 194b of the second electrode part 191b. The first extension 196a and the second extension 196b are connected to the extension portion 197 disposed therebetween. The extension portion 197 overlaps the extension portion 177 of the drain electrode 175 of the transistor Q in a plan view, and is connected to the extension portion 177 of the drain electrode 175 via the contact hole 185 to receive the data voltage.

The end portions of the left and right edges of the pixel electrode 191 may not overlap the extensions 131b as shown in FIG. 2, but in some exemplary embodiments, they may overlap with each other. The extensions 131b may include extensions overlapping the longitudinal stem part 193 of the pixel electrode 191 in some exemplary embodiments.

The shielding electrode 199 is spaced apart from the pixel electrode 191 and may extend substantially in the first direction x, and may be positioned between two pixel rows PXR neighboring in the second direction y. The shielding electrode 199 overlaps at least part of the gate line 121 to prevent light leakage that may occur near the gate line 121. The shielding electrode, which may be formed of the pixel electrode layer, may also be disposed on the extensions 131b of the storage electrode line 131.

A light blocking member 220 may be disposed below the second substrate 210. The light blocking member 220 may block the light leakage between neighboring pixel electrodes 191. In particular, the light blocking member 220 may be disposed in a region between the pixel electrodes 191 neighboring in the second direction y, and may extend substantially in the first direction x. In a plan view, the light blocking member 220 may prevent the light leakage by covering most of the region where the transistor Q, the gate line 121, and the drain electrode 175 are disposed.

On the other hand, the extension 131b of the storage electrode line 131 may block the light leakage between neighboring pixel electrodes 191 by overlapping most of the space between two pixel electrodes 191 neighboring in the first direction x.

A common electrode 270 may be disposed under the second substrate 210 and the light blocking member 220. The common electrode 270 may be formed continuously at the portion of the region corresponding to the display area DA. The common electrode 270 may include the transparent conductive material, such as ITO or IZO, or aluminum, silver, chromium, or alloys thereof. The color filter layer 230 may be disposed below the second substrate 210, for example, between the second substrate 210 and the common electrode 270.

The liquid crystal layer 3 may include liquid crystal molecules 31 having negative dielectric anisotropy. In some exemplary embodiments, however, the light crystal molecules 31 may have positive dielectric anisotropy. The liquid crystal molecules 31 may be oriented such that long axes thereof are substantially perpendicular or acute with respect to the surfaces of the first substrate 110 and the second substrate 210, when electric field is not applied in the liquid crystal layer 3. The liquid crystal molecules 31 may be pretilted according to the patterned portions of the pixel electrode 191 (e.g., a fringe field between the edge of the branch parts 194 and the common electrode 270).

An alignment layer 11 may be disposed on the pixel electrode 191, and an alignment layer 21 may be disposed under the common electrode 270. Both alignment layers 11 and 21 may be vertical alignment layers. Polymer protrusions (bumps) including reactive mesogens reacting with light, such as ultraviolet rays, may be disposed on surfaces of the alignment layers 11 and 21 adjacent to the liquid crystal layer 3, such that the pretilt of the liquid crystal molecules 31 of the liquid crystal layer 3 may be maintained through the polymer protrusions.

In the display device 1 according to an exemplary embodiment, when the data voltage is applied to the pixel electrode 191 and the common voltage is applied to the common electrode 270, an electric field is generated on the liquid crystal layer 3. The electric field includes a vertical component that is substantially perpendicular to the surfaces of the first substrate 110 and the second substrate 210, and a fringe field component that may be formed by the edge of the pattern of the transverse stem part 192, the longitudinal stem part 193, and the branch parts 194 of the pixel electrode 191. The liquid crystal molecules 31 may be tilted in a direction substantially parallel to the surfaces of the first substrate 110 and the second substrate 210 in response to the applied electric field, and in the region where the branch parts 194 are formed, the liquid crystal molecules 31 may be inclined toward the inside of each branch part 194 by the fringe field, and eventually be tilted in the direction substantially parallel to the extending direction of the branch parts 194. Accordingly, the liquid crystal layer 3 corresponding to each pixel electrode 191 may be divided into four regions having different directions in which the liquid crystal molecules 31 may be inclined. These four regions correspond to four sub-regions of the pixel electrode 191 described above.

When a pair of data lines 171a and 171b per pixel column PXC are disposed on a light blocking region between two adjacent pixel columns PXC, two data lines 171a and 171b of different pixel column PXCs may become immediately adjacent to each other, thereby increasing the risk of being shorted and increasing the crosstalk between the adjacent data lines 171a and 171b. In addition, when the alignment between the layers in the manufacturing process of the display device 1 is not precise, a parasitic capacitance between the data lines 171a and 171b and the pixel electrode 191 may be different on respective sides of the pixel electrode 191. Furthermore, increasing the spacing between the two adjacent data lines 171a and 171b to reduce the possibility of short and the crosstalk may deteriorate the aperture ratio of the display device, which may be disadvantageous for providing a high resolution. As such, a pair of data lines 171a and 171b according to an exemplary embodiment may be disposed to overlap the pixel electrode 191 in the corresponding pixel column PXC, which may reduce the risk of causing short and the crosstalk between the data lines 171a and 171b, and the change of the parasitic capacitance between the data lines 171a and 171b and pixel electrode 191 may be reduced or prevented.

However, when disposing a pair of data lines 171a and 171b to overlap the pixel electrode 191 disposed in the corresponding pixel column PXC, the electric field (hereinafter may be referred to as a "data field") caused by the data voltage transmitted through the data lines 171a and 171b may affect the liquid crystal layer 3 and distort the electric field in the liquid crystal layer 3. As such, the luminance of a specific region of the screen may be increased or decreased.

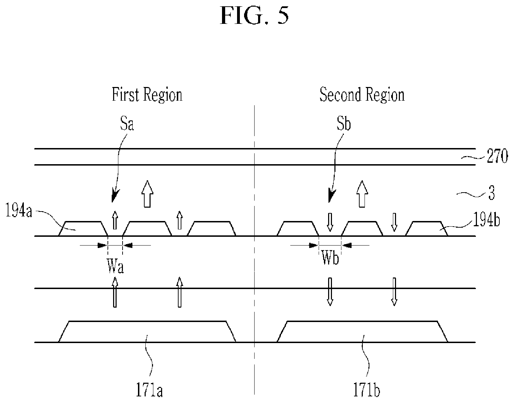

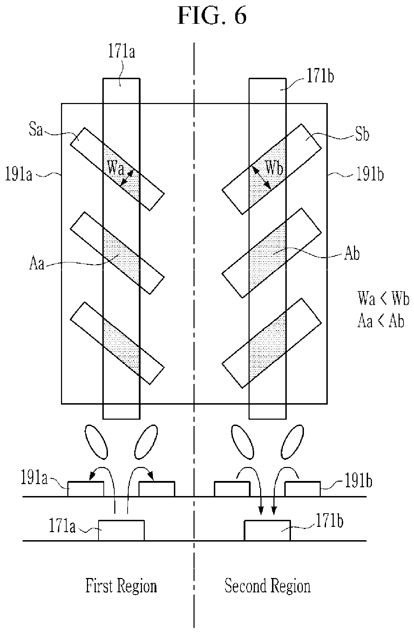

FIG. 5 is a schematic view exemplarily illustrating the influence of a data field in a display device according to the principles of the invention. FIG. 6 is a schematic view exemplarily illustrating the relation of a slit of a pixel electrode and a data line in a display device according to the principles of the invention. FIG. 5 schematically shows only the relevant configurations to illustrate the effect of the data fields of the data lines 171a and 171b.

Referring back to FIG. 2 to FIG. 4, since the first data line 171a and the second data line 171b respectively overlap the first electrode part 191a and the second electrode part 191b, the first data line 171a and the second data line 171b overlap the first slits Sa and the second slits Sb, respectively. The data fields of the first data line 171a and the second data line 171b are not completely shielded due to the first slits Sa and the second slits Sb, and thus, may affect the electric field in the liquid crystal layer 3 through the first slits Sa and the second slits Sb. For example, when displaying a high gray after displaying a low gray in the second direction y, which is a sequential output direction of the gate signal, the effect of this data field may appear as an increase in luminance in the low gray display area.

More specifically, during a particular frame, the first data line 171a may transmit a positive data voltage and the second data line 171b may transmit a negative data voltage. In the particular pixel column PXC during the corresponding frame, the pixel PX (hereinafter referred to as "a previous pixel") connected to the first data line 171a and receiving the positive data voltage (e.g., the data voltage of 10 V when the common voltage is 7.5 V) to display the low gray (e.g., about a gray of 25 to 32 in 255 grays) may be charged with the positive data voltage. In the previous pixel, the first region overlapping the first data line 171a may have an increased potential by a further higher positive data voltage (e.g., 15 V) applied to a different pixel PX (hereinafter "the next pixel") displaying the high gray, and thus, the luminance of the first region may be increased. On the other hand, in the previous pixel, the second region overlapping the second data line 171b may have a decreased potential by a lower negative data voltage (e.g., 0 V) applied to the next pixel displaying the high gray, and thus, the luminance of the second region may be decreased. Similarly, when the previous pixel is electrically connected to the second data line 171b, the luminance of the second region overlapping the second data line 171b may be increased and the luminance of the first region overlapping the first data line 171a may be decreased. In the low gray, the influence of the luminance increase is greater than the luminance decrease, so the luminance of the previous pixel may be increased overall.

The effect from the increase in luminance of the previous pixel is substantially the same when the electrically connected data line transmits the negative data voltage and the neighboring data line transmits the positive data voltage. For example, when the previous pixel is electrically connected to the first data line 171a, the first data line 171a transmits the negative data voltage and the second data line 171b transmits the positive data voltage. When the previous pixel is charged with the negative data voltage, the potential of the first region may be decreased by the further lower negative data voltage applied to the next pixel. This is because the negative data voltage is charged in the previous pixel, the intensity of the electric field is increased. As such, the luminance of the first region may be increased. In the second region, the potential of the second region may be increased by the further higher positive data voltage applied to the next pixel. This is because the negative data voltage is charged in the previous pixel, the intensity of the electric field decreases. As such, the luminance of the second region may be decreased. Accordingly, the luminance of the corresponding pixel PX may be increased overall, thereby deteriorating the image quality.

According to an exemplary embodiment, the first width Wa is formed to be different from the second width Wb to prevent deterioration of an image from increased luminance caused by the overlap between the pixel electrode 191 with a pair of data lines 171a and 171b. More particularly, when the first width Wa is formed to be less than the second width Wb, the data field may be reduced in the region (e.g., the first region overlapping the first data line 171a electrically connected to the corresponding pixel PX among a pair of data lines 171a and 171b) that may have the increased luminance. When the corresponding pixel is electrically connected to the second data line 171b, the second width Wb may be formed to be less than the first width Wa, thereby suppressing the increase of the luminance.

According to another exemplary embodiment, the influence of the data field may be controlled by varying the thickness of the insulating layer between a pair of data lines 171a and 171 b and the pixel electrode 191. For example, the insulating layer of the region overlapping the data line electrically connected to the corresponding pixel may be formed thicker than the insulating layer of the region overlapping the data line that is not electrically connected to the corresponding pixel. As the increased thickness of the insulating layer has a greater effect in voltage enhancement, the data field from the data line that is electrically connected to the corresponding pixel may be reduced. For example, when the pixel electrode 191 is electrically connected to the first data line 171a, the thickness of the second insulating layer 180a and/or the third insulating layer 180b may be formed thicker in the region overlapping the first electrode part 191a than in the region overlapping the second electrode part 191b.

Referring to FIG. 6, the first width Wa of the first slit Sa is less than the second width Wb of the second slit Sb, and the area of the region Aa where the first slit Sa overlaps the first data line 171a is smaller than the area of the region Ab where the second slit Sb and the second data line 171b are overlapped. Accordingly, the first electrode part 191a formed with the first slit Sa may further shield from the data field than the second electrode part 191b formed with the second slit Sb. In this manner, when the pixel electrode 191 is connected to the first data line 171a and receives the data voltage from the first data line 171a, the influence from the increased luminance in the region overlapping the first data line 171a may be reduced, thereby substantially offsetting or reducing the change of luminance in the corresponding pixel.

On the other hand, the above-described problem from increased luminance may also appear in the low gray display area, when displaying the low gray after displaying the high gray in the sequence output direction of the gate signal. This is because the low gray display area of the particular frame increases or decreases the potential of the first region due to the higher positive data voltage or the lower negative data voltage applied to the high gray display area of the next frame, thereby increasing the luminance. In this case, the first width Wa of the first slit Sa and the second width Wb of the second slit Sb may be varied according to the principles of the invention described above to substantially offset or reduce the change of luminance in the corresponding pixel.

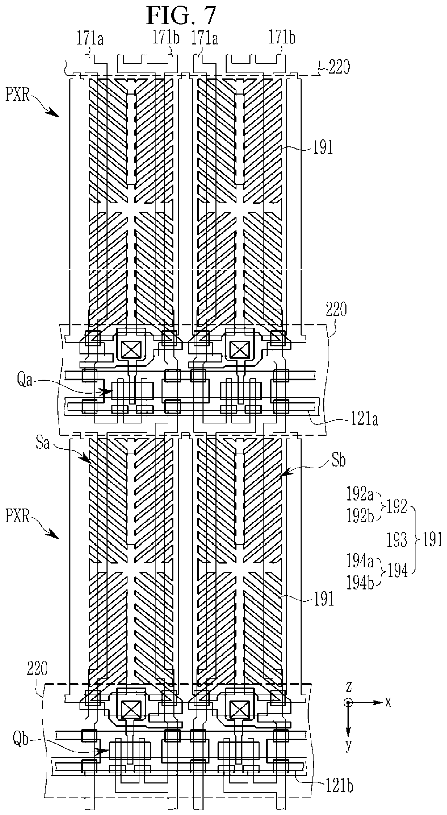

FIG. 7 is a top layout view of four adjacent pixels of the display device 1 constructed according to an example, which is not falling under the scope of the claimed invention. FIG. 7 shows the structure in which the pixel electrodes 191 disposed in the pixel rows PXR are connected to a pair of data lines 171a and 171b as in FIG. 1.

Referring to FIG. 7, among the pixel rows PXR, the pixel electrode 191 of the upper pixel row PXR is electrically connected to the first transistor Qa electrically connected to the first sub-gate line 121a and the first data line 171a, and the pixel electrode 191 of the lower pixel row PXR is electrically connected to the second transistor Qb electrically connected to the second sub-gate line 121b and the second data line 171b. Accordingly, in the lower pixel row PXR, the width of the second slits Sb overlapping the second data line 171b may be less than the width of the first slits Sa overlapping the first data line 171a.

The first sub-gate line 121a and the second sub-gate line 121b are electrically connected to each other to transmit the same gate signal. Thus, the pixel electrodes 191 of two pixel rows PXR neighboring in the second direction y may be alternately connected to the different data lines 171a and 171b through the transistors Qa and Qb. A pair of data lines 171a and 171b corresponding to one pixel column PXC may extend substantially in the second direction y across the pixel electrodes 191 of the corresponding pixel column PXC.

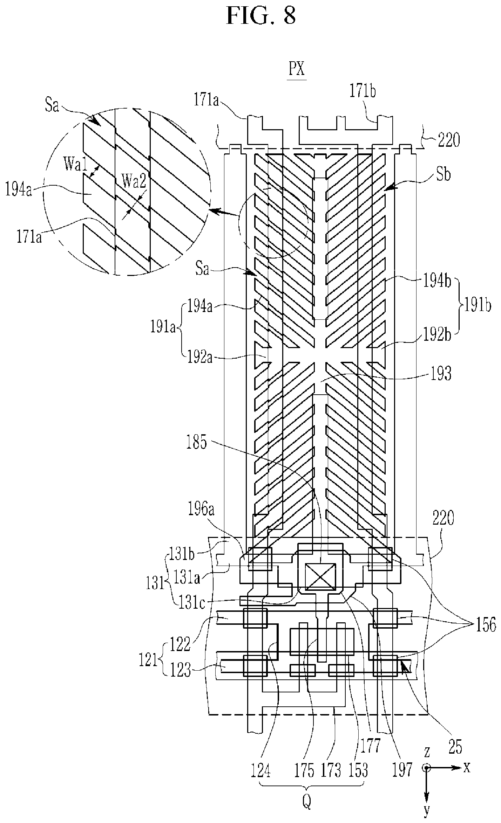

Next, the display device according to an exemplary embodiment is described with reference to FIG. 8 as well as the above-described drawings.

FIG. 8 is a top plan view of a pixel electrode and data lines of one pixel of a display device of FIG. 7 according to an exemplary embodiment.

Referring to FIG. 8, the display device according to an exemplary embodiment is substantially the same as the display device 1 described above, except the widths Wa1 and Wa2 of the first slit Sa of the first electrode part 191a are not substantially the same when the first data line 171a is electrically connected to the pixel electrode 191. More specifically, the first slit Sa includes a portion with a relatively wider width Wa1 and a portion with a relatively narrower width Wa2. In the first slit Sa, the portion with the width Wa2 overlaps the first data line 171a. The portion with the width Wa1 in the first slit Sa may not overlap the first data line 171a. The width Wa1 may be equal to or substantially equal to the width Wb of the second slit Sb of the second electrode part 191b. As such, when the widths Wa1 and Wa2 of the first slit Sa are formed relatively narrow only in the region overlapping the first data line 171a, while minimizing the design changes of the branch parts 194a and 194b of the pixel electrode 191, the area of the portion overlapping the first data line 171a in the first slit Sa may be reduced, thereby reducing the influence of the data field due to the first data line 171a electrically connected to the corresponding pixel PX.

On the other hand, when the second data line 171b is electrically connected to the pixel electrode 191, the widths Wa1 and Wa2 of the first slit Sa of the first electrode part 191a may be substantially the same as each other, and the width Wb of the second slit Sb of the second electrode part 191b may be formed to have at least two different widths, in which a relatively narrower one disposed in portion overlapping the second data line 171b.

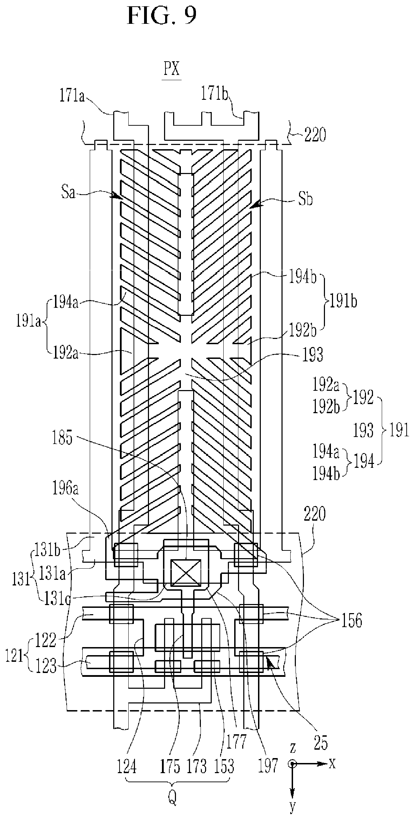

Next, the display device according to an exemplary embodiment is described with reference to FIG. 9 to FIG. 11 as well as the above-described drawings.

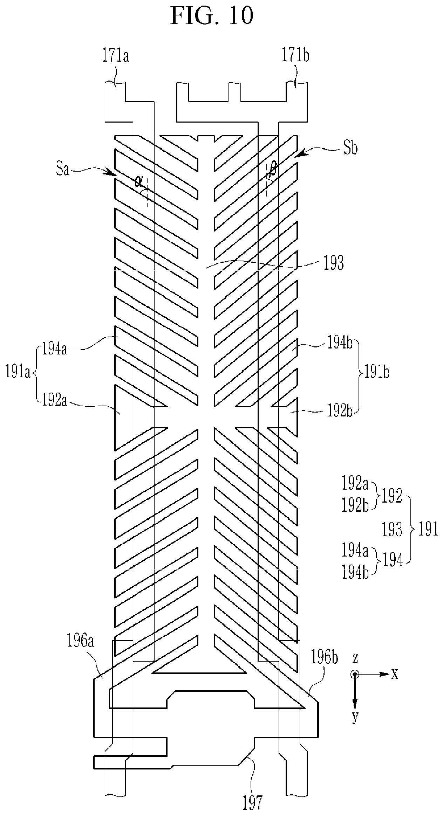

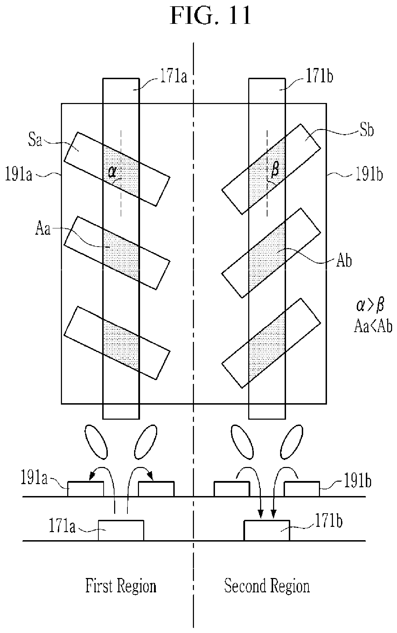

FIG. 9 is a top layout view of one pixel of a display device of FIG. 7 according to an exemplary embodiment, FIG. 10 is a top plan view of the pixel electrode and data lines in the pixel of FIG. 9, and FIG. 11 is a schematic view exemplary illustrating the relationship of a slit of a pixel electrode and a data line in a display device according to the principles of the invention.

Referring to FIGS. 9 and 10, the display device according to the illustrated exemplary embodiment is substantially the same as the display device of FIG. 2 and FIG. 3, except for the shape of the pixel electrode 191. In particular, in the pixel electrode 191 according to the illustrated exemplary embodiment, a first angle α, which is an acute angle formed between the extending direction of the first slit Sa of the first electrode part 191a and the second direction y, is different from a second angle β formed between the extending direction of the second slit Sb of the second electrode part 191b and the second direction y. The extending direction of the first slit Sa corresponds to the extending direction of the first branch part 194a adjacent to the first slit Sa, and the extending direction of the second slit Sb corresponds to the extending direction of the second branch part 194b adjacent to the second slit Sb. When the pixel electrode 191 is electrically connected to the first data line 171a, the first angle α may be greater than the second angle β. In particular, the first branch parts 194a and the first slit Sa are more inclined toward the transverse stem part 192 than the second branch parts 194b and the second slit Sb. For example, the first angle α may be greater than the second angle β by about 1° to about 30°, or about 5° to about 20°. When the first angle α and the second angle β are different from each other, the area of the first slit Sa overlapping the first data line 171a and the area of the second slit Sb overlapping the second data line 171b may also be different from each other. Referring to FIG. 11, even when the width of the first slit Sa and the width of the second slit Sb are the same, when the first angle α is greater than the second angle β, the area of the region Aa where the first slit Sa and the first data line 171a are overlapped is smaller than the area of the region Ab where the second slit Sb and the second data line 171b are overlapped. Therefore, since the first electrode part 191a formed with the first slit Sa may shield the data field more than the second electrode part 191b formed with the second slit Sb, when the pixel electrode 191 is electrically connected to the first data line 171a to receive the data voltage from the first data line 171a, the luminance increase may be suppressed in the region overlapping the first data line 171a.

On the other hand, when the pixel electrode 191 is electrically connected to the second data line 171b, the second angle β may be greater than the inclination first angle α of the first slit Sa.

In some exemplary embodiments, the first angle α and the second angle β are formed to be different with each other as shown in FIG. 9 and FIG. 10, and the first width Wa and the second width Wb are formed to be different with each other as shown in FIG. 2 and FIG. 3, to suppress the luminance increase in the region overlapping the electrically connected data line of a pair of data lines 171a and 171b. For example, when the pixel electrode 191 is electrically connected to the first data line 171a, the first angle α may be greater than the second angle β and the first width Wa may be less than the second width Wb.

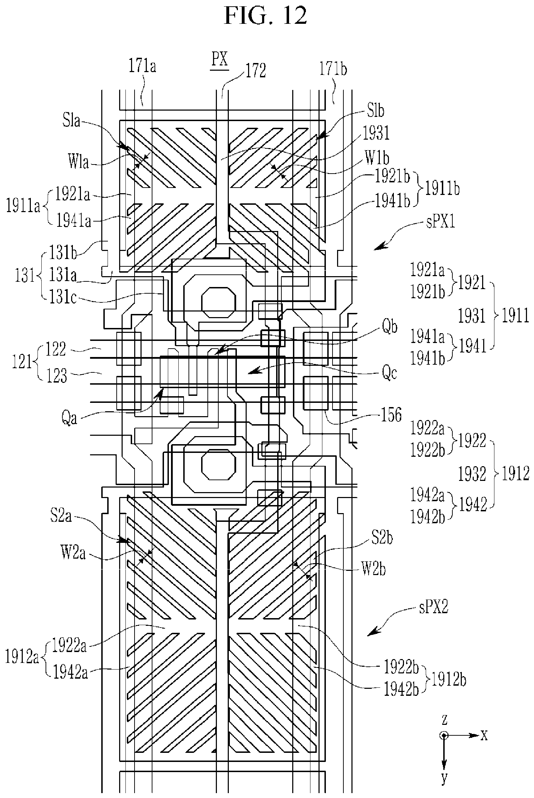

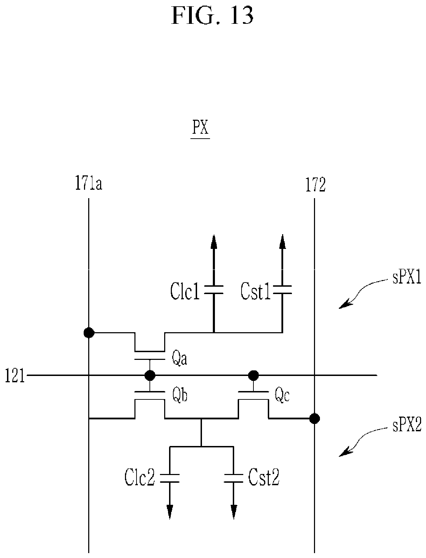

FIG. 12 is a top layout view of one pixel of a display device according to an example, which is not falling under the scope of the claimed invention, and FIG. 13 is an equivalent circuit diagram of a representative pixel shown in FIG. 12. The display device according to this illustrated example is substantially similar to the display device described above, and thus, descriptions of substantially similar components will be omitted to avoid redundancy, and the differences will be mainly described.

Referring to FIG. 12, one pixel PX is divided into two subpixels sPX1 and sPX2, and the first data line 171a of a pair of data lines 171a and 171b overlapping the pixel PX is electrically connected to the pixel PX to improve lateral visibility. A first subpixel electrode 1911 and the second subpixel electrode 1912 are electrically connected to the first data line 171a.

Referring to FIG. 13, the pixel PX is connected to the gate line 121, the first data line 171a, and a reference voltage line 172. The pixel PX incudes the first subpixel sPX1 and the second subpixel sPX2. The first subpixel sPX1 includes the first transistor Qa, the first liquid crystal capacitor Clc1, and the first storage capacitor Cst1, and the second subpixel sPX2 includes the second transistor Qb, the third transistor Qc, the second liquid crystal capacitor Clc2, and the second storage capacitor Cst2.

The first transistor Qa and the second transistor Qb are connected to the gate line 121 and the first data line 171a, respectively, and the third transistor Qc is connected to the output terminal of the second transistor Qb and the reference voltage line 172.

The output terminal of the first transistor Qa is connected to the first liquid crystal capacitor Clc1 and the first storage capacitor Cst1, and the output terminal of the second transistor Qb is connected to the second liquid crystal capacitor Clc2, the second storage capacitor Cst2, and the input terminal of the third transistor Qc. The control terminal of the third transistor Qc is connected to the gate line 121, the input terminal thereof is connected to the second liquid crystal capacitor Clc2 and the second storage capacitor Cst2, and the output terminal is connected to the reference voltage line 172.

As shown in the equivalent circuit diagram of the pixel PX shown in FIG. 13, if the gate-on voltage is applied to the gate line 121, the first transistor Qa, the second transistor Qb, and the third transistor Qc are turned on. As such, the data voltage applied to the first data line 171a is applied to the first liquid crystal capacitor Clc1 and the second liquid crystal capacitor Clc2 through the turned-on first transistor Qa and second transistor Qb, respectively, and the first liquid crystal capacitor Clc1 and the second liquid crystal capacitor Clc2 are charged to the difference between the data voltage and the common voltage. In this case, the same data voltage is applied to the first liquid crystal capacitor Clc1 and the second liquid crystal capacitor Clc2 through the first transistor Qa and the second transistor Qb, respectively, while the charging voltage of the second liquid crystal capacitor Clc2 is divided through the third transistor Qc. Therefore, the charging voltage of the second liquid crystal capacitor Clc2 becomes less than the charging voltage of the first liquid crystal capacitor Clc1, thereby differentiating the luminance of the two subpixels sPX1 and sPX2. By properly adjusting the voltage charged in the first liquid crystal capacitor Clc1 and the voltage charged in the second liquid crystal capacitor Clc2, the image viewed from the side may be made as close as possible to the image viewed from the front, thereby improving the lateral visibility.

Referring back to FIG. 12, the first subpixel sPX1 includes the first subpixel electrode 1911, and the second subpixel sPX2 includes the second subpixel electrode 1912. The first subpixel electrode 1911 corresponds to one electrode of the first liquid crystal capacitor Clc1 described above, and the second subpixel electrode 1912 corresponds to one electrode of the second liquid crystal capacitor Clc2 described above. The gate line 121, which may include a pair of line portions 122 and 123, is disposed between the first subpixel electrode 1911 and the second subpixel electrode 1912.

The first subpixel electrode 1911 includes a transverse stem part 1921, a longitudinal stem part 1931, and branch parts 1941. The transverse stem part 1921 includes a first transverse stem part 1921a and a second transverse stem part 1921b disposed on the left and right sides of the longitudinal stem part 1931, respectively. The branch parts 1941 include first branch parts 1941a and second branch parts 1941b disposed on the left and right sides of the longitudinal stem part 1931, respectively. The first slit S1a is disposed between neighboring first branch parts 1941a, and the second slit S1b is disposed between neighboring second branch parts 1941b. When a portion of the first subpixel electrode 1911 disposed on the left side of the longitudinal stem part 1931 is referred to as a first electrode part 1911a, the first electrode part 1911a includes the first transverse stem part 1921a and the first branch parts 1941a, and the first slits S1a are formed in the first electrode part 1911a. When a portion of the first subpixel electrode 1911 disposed on the right side of the longitudinal stem part 1931 is referred to as a second electrode part 1911b, the second electrode part 1911b includes the second transverse stem part 1921b and the second branch parts 1941b, and the second slits S1b are formed in the second electrode part 1911b.

As with the first subpixel electrode 1911, the second subpixel electrode 1912 includes a transverse stem part 1922, a longitudinal stem part 1932, and branch parts 1942. The transverse stem part 1922 includes a first transverse stem part 1922a and a second transverse stem part 1922b disposed on the left and right sides of the longitudinal stem part 1932, respectively. The branch parts 1942 include first branch parts 1942a and second branch parts 1942b disposed on the left and right sides of the longitudinal stem part 1932, respectively. The third slit S2a is disposed between neighboring first branch parts 1942a and the fourth slit S2b is disposed between neighboring second branch parts 1942b. A third electrode part 1912a includes the first transverse stem part 1922a and the first branch parts 1942a, and the third electrode part 1912a has the third slits S2a. A fourth electrode part 1912b includes the second transverse stem part 1922b and the second branch parts 1942b, and the fourth electrode part 1912b includes the fourth slits S2b.

A pair of data lines 171a and 171b extending substantially in the second direction y overlap the first subpixel electrode 1911, and also overlap the second subpixel electrode 1912. The first data line 171a overlaps the first electrode part 1911a and the first slits S1a of the first subpixel electrode 1911, and overlaps the third electrode part 1912a and the third slits S2a of the second subpixel electrode 1912. The second data line 171b overlaps the second electrode part 1911b and the second slits S1b of the first subpixel electrode 1911, and overlaps the fourth electrode part 1912b and the fourth slit S2b of the second subpixel electrode 1912).

The first width W1a of the first slit S1a on the first subpixel electrode 1911 is different from the second width W1b of the second slit S1b. On the second subpixel electrode 1912, the third width S2a of the third slit S2a is different from the fourth width W2b of the fourth slit S2b. When the first data line 171a is electrically connected to the first subpixel electrode 1911 and the second subpixel electrode 1912, as shown in FIG. 12, the first width W1a may be less than the second width W1b, and the third width W2a may be less than the fourth width W2b. Alternatively, when the second data line 171b is electrically connected to the first subpixel electrode 1911 and the second subpixel electrode 1912, the second width W1b may be less than the first width W1a, and the fourth width W2b may be less than the third width W2a. In this manner, the overlapping area between the slit and the data line may be reduced, for example, by relatively narrowing the width of the slit overlapping the data line which is electrically connected to the corresponding pixel PX among a pair of data lines 171a and 171b, and thus, the low gray display area may suppress the increase of the luminance due to the data field that may be caused by the data voltage applied to the high gray display area.

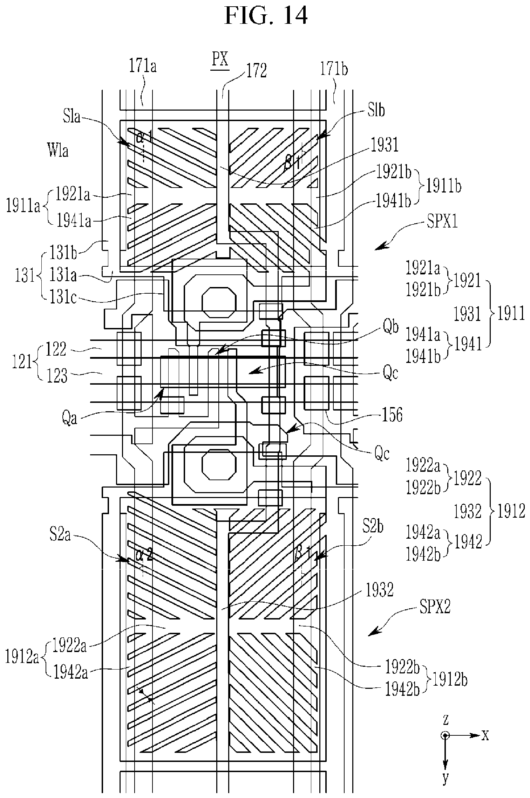

FIG. 14 is a top layout view of one pixel of a display device according to an exemplary embodiment.

Referring to FIG. 14, the display device according to the illustrated exemplary embodiment is substantially the same as the display device shown in FIG. 12, except for the shapes of the first subpixel electrode 1911 and the second subpixel electrode 1912. In particular, in the first subpixel electrode 1911, the first angle α1 as the acute angle between the extending direction of the first slit S1a of the first electrode part 1911a and the second direction y is different from the second angle β1 as the acute angle between the extending direction of the second slit S1b of the second electrode part 1911b and the second direction y. In the second subpixel electrode 1912, the third angle α2 as the acute angle between the extending direction of the third slit S2a of the third electrode part 1912a and the second direction y is different from the fourth angle β2 as the acute angle between the extending direction of the fourth slit S2b of the fourth electrode part 1912b and the second direction y. When the first data line 171a is electrically connected to the first subpixel electrode 1911 and the second subpixel electrode 1912, as shown in FIG. 14, the first angle α1 may be greater than the second angle β1, and the third angle α2 maybe greater than the fourth angle β2. Alternatively, when the second data line 171b is electrically connected to the first subpixel electrode 1911 and the second subpixel electrode 1912, the second angle β1 may be greater than the first angle α1, and the fourth angle β2 may be greater than the third angle α2. In this manner, relatively increasing the angle of the slit overlapping the data line which is electrically connected to the corresponding pixel PX among a pair of data lines 171a and 171b may reduce the overlapping area between the slit and the data line, and thus, the low gray display area may suppress the increase of the luminance that may be caused from to the data voltage applied to the high gray display area.

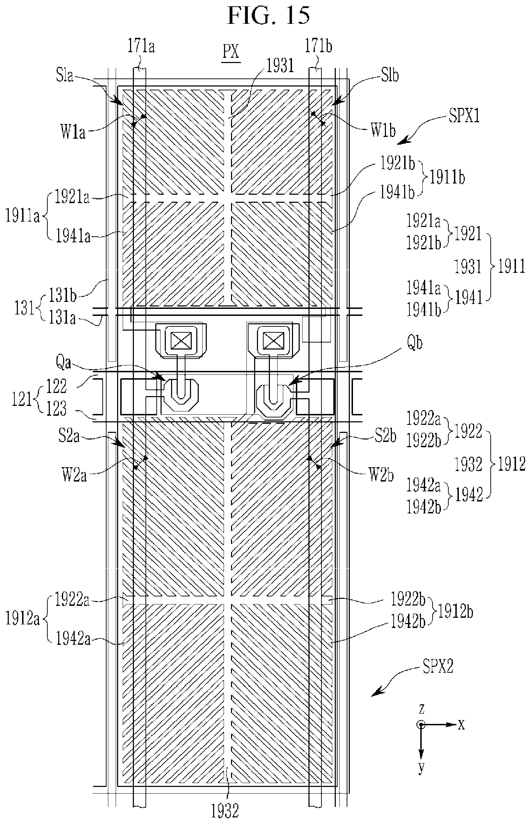

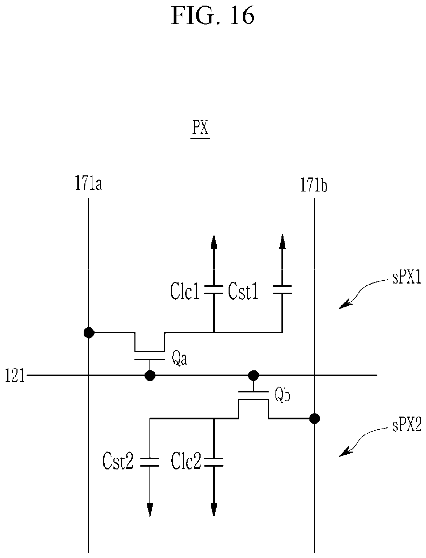

FIG. 15 is a top layout view of one pixel of a display device according to an example, which is not falling under the scope of the claimed invention, and FIG. 16 is an equivalent circuit diagram of a representative pixel shown in FIG. 15. The display device according to this illustrated example is substantially similar to the display device described above, and thus, descriptions of substantially similar components will be omitted to avoid redundancy, and the differences will be mainly described.

Referring to FIG. 15, one pixel PX is divided into two subpixels sPX1 and sPX2, the first data line 171a of a pair of data lines 171a and 171b overlapping the pixel PX is electrically connected to the first subpixel sPX1, and the second data line 171b is electrically connected to the second subpixel sPX2 to improve side visibility.

As shown in the equivalent circuit diagram of FIG. 16, the pixel PX is connected to the gate line 121, the first data line 171a, and the second data line 171b. The pixel PX includes the first subpixel sPX1 and the second subpixel sPX2. The first subpixel sPX1 includes the first transistor Qa, the first liquid crystal capacitor Clc1, and the first storage capacitor Cst1, and the second subpixel sPX2 includes the second transistor Qb, the third transistor Qc, the second liquid crystal capacitor Clc2, and the second storage capacitor Cst2.

The first transistor Qa includes the control terminal connected to the gate line 121 and the input terminal connected to the first data line 171a. The output terminal of the first transistor Qa is connected to the first liquid crystal capacitor Clc1 and the first storage capacitor Cst1. The second transistor Qb includes the control terminal connected to the gate line 121 and the input terminal connected to the second data line 171b. The output terminal of the second transistor Qb is connected to the second liquid crystal capacitor Clc2 and the second storage capacitor Cst2.

The first liquid crystal capacitor Clc1 and the second liquid crystal capacitor Clc2 may receive different data voltages based on one image signal through the first transistor Qa and the second transistor Qb connected to the first data line 171a and the second data line 171b, respectively. By appropriately adjusting the data voltage charged to the first liquid crystal capacitor Clc1 and the data voltage charged to the second liquid crystal capacitor Clc2, the image viewed from the side may be made as close as possible to the image viewed from the front, thereby improving the lateral visibility.

Referring back to FIG. 15, the first subpixel sPX1 includes the first subpixel electrode 1911, and the second subpixel sPX2 includes the second subpixel electrode 1912. The first subpixel electrode 1911 corresponds to one electrode of the first liquid crystal capacitor Clc1 described above, and the second subpixel electrode 1912 corresponds to one electrode of the second liquid crystal capacitor Clc2 described above.

The first subpixel electrode 1911 includes a transverse stem part 1921, a longitudinal stem part 1931, and branch parts 1941. The transverse stem part 1921 includes a first transverse stem part 1921a and a second transverse stem part 1921b disposed on the left and right sides of the longitudinal stem part 1931, respectively. The branch parts 1941 include first branch parts 1941a and second branch parts 1941b disposed on the left and right sides of the longitudinal stem part 1931, respectively. A first slit S1a is disposed between neighboring first branch parts 1941a and a second slit S1b is disposed between neighboring second branch parts 1941b. When a portion of the first subpixel electrode 1911 disposed on the left side of the longitudinal stem part 1931 is referred to as a first electrode part 1911a, the first electrode part 1911a includes a first transverse stem part 1921a and first branch parts 1941a, and the first slits S1a are formed on the first electrode part 1911a. When a portion of the first subpixel electrode 1911 disposed on the right side of the longitudinal stem part 1931 is referred to as the second electrode part 1911b, the second electrode part 1911b includes a second transverse stem part 1921b and second branch parts 1941b, and the slits S1b are formed on the second electrode part 1911b.

As in the first subpixel electrode 1911, the second subpixel electrode 1912 includes the transverse stem part 1922, the longitudinal stem part 1932, and branch parts 1942. The transverse stem part 1922 includes a first transverse stem part 1922a and a second transverse stem part 1922b disposed on the left and right sides of the longitudinal stem part 1932, respectively. The branch parts 1942 include first branch parts 1942a and second branch parts 1942b disposed on the left and right sides of the longitudinal stem part 1932, respectively. A third slit S2a is disposed between neighboring first branch parts 1942a, and a fourth slit S2b is disposed between neighboring second branch parts 1942b. The third electrode part 1912a includes a first transverse stem part 1922a and first branch parts 1942a, and the third electrode part 1912a has third slits S2a. The fourth electrode part 1912b includes the second transverse stem part 1922b and the second branch parts 1942b, and the fourth electrode part 1912b includes the fourth slits S2b.

A pair of data lines 171a and 171b extending substantially in the second direction y overlap the first subpixel electrode 1911 and the second subpixel electrode 1912. The first data line 171a overlaps the first electrode part 1911a and the first slits S1a of the first subpixel electrode 1911, and overlaps the third electrode part 1912a and the third slits S2a of the second subpixel electrode 1912. The second data line 171b overlaps the second electrode part 1911b and the second slits S1b of the first subpixel electrode 1911, and overlaps the fourth electrode part 1912b and the fourth slit S2b of the second subpixel electrode 1912.

The first width W1a of the first slit S1a in the first subpixel electrode 1911 is different from the second width W1b of the second slit S1b. The third width W2a of the third slit S2a in the second subpixel electrode 1912 is different from the fourth the width W2b of the fourth slit S2b. The first data line 171a is electrically connected to the first subpixel electrode 1911, and the second data line 171b is electrically connected to the second subpixel electrode 1912. When displaying the high gray after displaying the high gray in the sequential output direction of the gate signal, the first subpixel sPX1 increases the luminance in the region overlapping the first data line 171a, and the second subpixel sPX2 increases the luminance in the region overlapping the second data line 171b. Such an increase in the luminance increase may be particularly problematic when the first data line 171a and the second data line 171b transmit the data voltages of different polarities, for substantially the same reasons described above with reference to FIG. 5.

According to an example, the first width W1a may be less than the second width W1b, and the fourth width W2b may be less than the third width W2a, to suppress the increase in luminance. Alternatively, when the second data line 171b is electrically connected to the first subpixel electrode 1911 and the first data line 171a is electrically connected to the second subpixel electrode 1912, the second width W1b may be less than the first width W1a and the third the width W2a may be smaller than the fourth width W2b. In this manner, reducing the overlapping area between the slit and the data line, for example, by relatively narrowing the width of the slit overlapping the data line electrically connected to the corresponding subpixel sPX1 and sPX2 among a pair of data lines 171a and 171b, the low gray display area may suppress the increase of the luminance due to the data field which may be caused from the data voltage applied to the high gray display area.

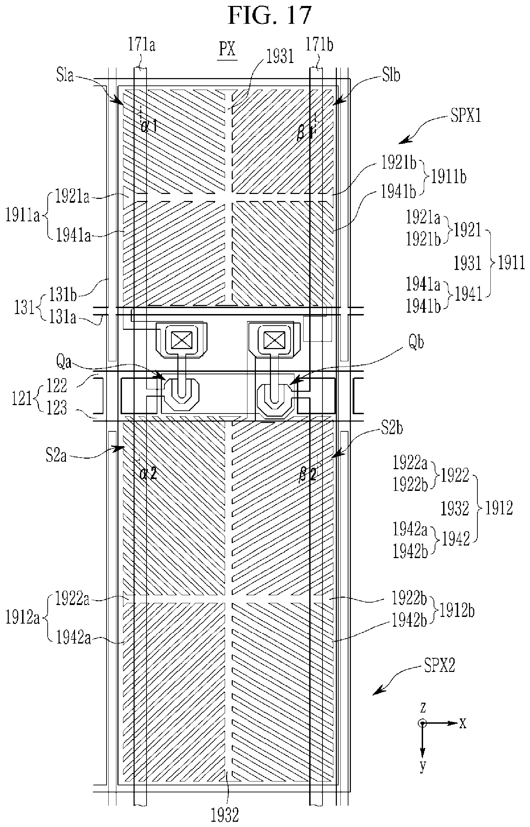

FIG. 17 is a top layout view of one pixel of a display device according to an exemplary embodiment.

The display device according to the illustrated exemplary embodiment is substantially the same as the display device shown in FIG. 15, except for the shapes of the first subpixel electrode 1911 and the second subpixel electrode 1912. In particular, in the first subpixel electrode 1911, the first angle α1 as the acute angle between the extending direction of the first slit S1a of the first electrode part 1911a and the second direction y is different from the second angle β1 as the acute angle between the extending direction of the second slit S1b of the second electrode part 1911b and the second direction y. In the second subpixel electrode 1912, the third angle α2 as the acute angle between the extending direction of the third slit S2a of the third electrode part 1912a and the second direction y is different from the fourth angle β2 as the acute angle between the extending direction of the fourth slit S2b of the fourth electrode part 1912b and the second direction y. When the first data line 171a is electrically connected to the first subpixel electrode 1911 and the second data line 171b is electrically connected to the second subpixel electrode 1912, as shown in FIG. 17, the first angle α1 may be greater than the second angle β1, and the fourth angle β2 may be greater than the third angle α2. Alternatively, when the second data line 171b is electrically connected to the first subpixel electrode 1911 and the first data line 171a is electrically connected to the second subpixel electrode 1912, the second angle β1 may be greater than the first angle α1, and the third angle α2 may be greater than the fourth angle β2.

In this manner, by relatively increasing the angle of the slit overlapping the data line, which is electrically connected to the corresponding subpixel sPX1 and sPX2 among a pair of data lines 171a and 171b, to reduce the overlapping area between the slit and the data line, the low gray display area may suppress the increase of the luminance due to the data voltage applied to the high gray display area, thereby preventing deterioration in the image quality of a display device.

Embodiments of the invention provide a display device comprising: a first pixel electrode including a first electrode part having a first slit and a second electrode part having a second slit; and a first data line and a second data line overlapping the first pixel electrode, the first and second data lines being adjacent to each other in a first direction, wherein: the first data line overlaps the first electrode part and the first slit, and the second data line overlaps the second electrode part and the second slit; and a first area defined by a first overlapping region between the first slit and the first data line is different from a second area defined by a second overlapping region between the second slit and the second data line.

The first pixel electrode may comprise a longitudinal stem part and a plurality of first branch parts extending from one side of the longitudinal stem part and a plurality of second branch parts extending from another side of the longitudinal stem part. The first slit may be formed between two adjacent first branch parts, and the second slit may be formed between two adjacent second branch parts. There may be a plurality of first and second slits. The longitudinal stem part may generally extend in the same direction as the first and second data line.

The first pixel electrode may further includes a transverse stem part extending in a direction crossing the longitudinal stem part. One or more first branch parts and/or one or more second branch parts may extend from the transverse stem part.

Although certain exemplary embodiments and implementations have been described herein, other embodiments and modifications will be apparent from this description. Accordingly, the inventive concepts are not limited to such embodiments, but rather to the broader scope of the appended claims.

## Claims

1. A display device (1) comprising:
a first pixel electrode (191) including a first electrode part (191a) having a first slit (Sa) and a second electrode part (191b) having a second slit (Sb); and
a first data line (171a) and a second data line (171b), the first and second data lines (171a, 171b) being adjacent to each other in a first direction, wherein the first pixel electrode (191) overlaps the first data line (171a) and the second data line (171b),
wherein:
the first electrode part (191a) and the first slit (Sa) overlap the first data line (171a), and the second electrode part (191b) and the second slit (Sb) overlap the second data line (171b);
a first area defined by a first overlapping region (Aa) between the first slit (Sa) and the first data line (171a) is different from a second area defined by a second overlapping region (Ab) between the second slit (Sb) and the second data line (171b);
the first data line (171a) is electrically connected to the first pixel electrode (191a); and
the first slit (Sa) has a first width (Wa) and the second slit (Sb) has a second width (Wb), wherein the first width (Wa) of the first slit (Sa) is less than the second width (Wb) of the second slit (Sb),
**characterized in that** the first slit (Sa) includes a first slit portion having the first width (Wa2) and a second slit portion having a third width (Wa1) greater than the first width; and
the first slit portion overlaps the first data line (171a) and the second slit portion does not overlap the first data line (171a).

2. The display device (1) of claim 1, further comprising a second pixel electrode adjacent to the first pixel electrode in a second direction intersecting the first direction,
wherein the second data line (171b) is electrically connected to the second pixel electrode.

3. The display device (1) of claim 2, wherein:
the second pixel electrode includes a first electrode part and a second electrode part respectively aligned with the first electrode part and the second electrode part of the first pixel electrode in the second direction; and
in the second pixel electrode, the first electrode part includes a first slit, the second electrode part includes a second slit, and a width of the second slit is less than a width of the first slit.

4. The display device (1) of claim 2 or 3, further comprising a gate line (121) extending substantially in the first direction,
wherein the gate line includes a first sub-gate line (121a) electrically connected to the first pixel electrode and a second sub-gate line (121b) electrically connected to the second pixel electrode.

5. The display device (1) of any one of claims 1 to 4, wherein:
the first pixel electrode (191) further includes a transverse stem part (192), a longitudinal stem part (193) intersecting the transverse stem part, and a plurality of branch parts (194) extending from the transverse stem part or the longitudinal stem part; and
the first electrode part (191a) is disposed at one side of the longitudinal stem part, and the second electrode part (191b) is disposed at the other side of the longitudinal stem part.

6. The display device (1) of claim 5, wherein the first slit (Sa) and the second slit (Sb) are spaced at an interval between adjacent branch parts of the plurality of branch parts (194).

7. The display device (1) of claim 5 or 6, wherein the first slit (Sa) and the second slit (Sb) are disposed symmetrically with respect to the longitudinal stem part (193).

8. The display device (1) of any one of claims 1 to 7, wherein the first data line (171a) and the second data line (171b) are configured to transmit data voltages having different polarities from each other during one frame.

9. A display device (1) comprising:
a first pixel electrode (191) including a first electrode part (191a) having a first slit (Sa) and a second electrode part (191b) having a second slit (Sb); and
a first data line (171a) and a second data line (171b), the first and second data lines (171a, 171b) being adjacent to each other in a first direction, wherein the first pixel electrode (191) overlaps the first data line (171a) and the second data line (171b),
wherein:
the first pixel electrode further includes a transverse stem part (192), a longitudinal stem part (193) intersecting the transverse stem part, and a plurality of branch parts (194) extending from the transverse stem part or the longitudinal stem part;
the first electrode part (191a) is disposed at one side of the longitudinal stem part (193), and the second electrode part (191b) is disposed at the other side of the longitudinal stem part (193);
the first slit and the second slit are disposed symmetrically with respect to the longitudinal stem part;
the first electrode part and the first slit overlap the first data line, and the second electrode part and the second slit overlap the second data line;
a first area defined by a first overlapping region (Aa) between the first slit and the first data line is different from a second area defined by a second overlapping region (Ab) between the second slit and the second data line; the first data line (171a) is electrically connected to the first pixel electrode (191);
**characterized in that** a first acute angle (a) defined between the extending direction of the first slit and a second direction perpendicular to the first direction is different from a second acute angle (β) defined between the extending direction of the second slit and the second direction; and
the first acute angle is greater than the second acute angle.

10. The display device (1) of claim 9, further comprising:
a second pixel electrode (1912) adjacent to the first pixel electrode in the second direction intersecting the first direction,
wherein:
the second data line (171b) is electrically connected to the second pixel electrode;
the second pixel electrode (1912) includes a first electrode part (1912a) and a second electrode part (1912b) respectively aligned with the first electrode part and the second electrode part of the first pixel electrode in the second direction; and
in the second pixel electrode, the first electrode part includes a first slit (S2a), the second electrode part includes a second slit (S2b), and a third acute angle defined between the extending direction of the second slit and the second direction is greater than a fourth acute angle defined between the extending direction of the first slit and the second direction.

## Patentansprüche

1. Anzeigevorrichtung (1), umfassend:
eine erste Pixelelektrode (191), die einen ersten Elektrodenteil (191a) mit einem ersten Spalt (Sa) und einen zweiten Elektrodenteil (191b) mit einem zweiten Spalt (Sb) aufweist; und
eine erste Datenleitung (171a) und eine zweite Datenleitung (171b), wobei die erste und die zweite Datenleitung (171a, 171b) in einer ersten Richtung zueinander benachbart sind, wobei die erste Pixelelektrode (191) die erste Datenleitung (171a) und die zweite Datenleitung (171b) überlappt,
wobei:
der erste Elektrodenteil (191a) und der erste Spalt (Sa) die erste Datenleitung (171a) überlappen und der zweite Elektrodenteil (191b) und der zweite Spalt (Sb) die zweite Datenleitung (171b) überlappen;
eine erste Fläche, definiert durch einen ersten Überlappungsbereich (Aa) zwischen dem ersten Spalt (Sa) und der ersten Datenleitung (171a), sich von einer zweiten Fläche, definiert durch einen zweiten Überlappungsbereich (Ab) zwischen dem zweiten Spalt (Sb) und der zweiten Datenleitung (171b), unterscheidet;
die erste Datenleitung (171a) elektrisch an die erste Pixelelektrode (191a) angeschlossen ist; und
der erste Spalt (Sa) eine erste Breite (Wa) aufweist und der zweite Spalt (Sb) eine zweite Breite (Wb) aufweist, wobei die erste Breite (Wa) des ersten Spaltes (Sa) kleiner als die zweite Breite (Wb) des zweiten Spaltes (Sb) ist,
**dadurch gekennzeichnet, dass** der erste Spalt (Sa) einen ersten Spaltabschnitt mit der ersten Breite (Wa2) und einen zweiten Spaltabschnitt mit einer dritten Breite (Wa1), die größer als die erste Breite ist, aufweist; und
der erste Spaltabschnitt die erste Datenleitung (171a) überlappt und der zweite Spaltabschnitt die erste Datenleitung (171a) nicht überlappt.

2. Anzeigevorrichtung (1) nach Anspruch 1, ferner umfassend eine zweite Pixelelektrode, die der ersten Pixelelektrode in einer zweiten Richtung, die die erste Richtung schneidet, benachbart ist,
wobei die zweite Datenleitung (171b) elektrisch an die zweite Pixelelektrode angeschlossen ist.

3. Anzeigevorrichtung (1) nach Anspruch 2, wobei:
die zweite Pixelelektrode einen ersten Elektrodenteil und einen zweiten Elektrodenteil aufweist, die in der zweiten Richtung entsprechend auf den ersten Elektrodenteil und den zweiten Elektrodenteil der ersten Pixelelektrode ausgerichtet sind; und
in der zweiten Pixelelektrode der erste Elektrodenteil einen ersten Spalt aufweist, der zweite Elektrodenteil einen zweiten Spalt aufweist und eine Breite des zweiten Spaltes kleiner als eine Breite des ersten Spaltes ist.

4. Anzeigevorrichtung (1) nach Anspruch 2 oder 3, ferner umfassend eine Gate-Leitung (121), sie sich im Wesentlichen in die erste Richtung erstreckt,
wobei die Gate-Leitung eine erste Unter-Gate-Leitung (121a), die elektrisch an die erste Pixelelektrode angeschlossen ist, und eine zweite Unter-Gate-Leitung (121b), die elektrisch an die zweite Pixelelektrode angeschlossen ist, aufweist.

5. Anzeigevorrichtung (1) nach einem der Ansprüche 1 bis 4, wobei:
die erste Pixelelektrode (191) ferner einen Querstammteil (192), einen Längsstammteil (193), der den Querstammteil schneidet, und eine Mehrzahl von Zweigteilen (194), die sich von dem Querstammteil oder dem Längsstammteil aus erstrecken, aufweist; und
der erste Elektrodenteil (191a) auf einer Seite des Längsstammteils angeordnet ist und der zweite Elektrodenteil (191b) auf der anderen Seite des Längsstammteils angeordnet ist.

6. Anzeigevorrichtung (1) nach Anspruch 5, wobei der erste Spalt (Sa) und der zweite Spalt (Sb) in einem Abstand zwischen benachbarten Zweigteilen der Mehrzahl von Zweigteilen (194) beabstandet sind.

7. Anzeigevorrichtung (1) nach Anspruch 5 oder 6, wobei der erste Spalt (Sa) und der zweite Spalt (Sb) bezüglich des Längsstammteils (193) symmetrisch angeordnet sind.

8. Anzeigevorrichtung (1) nach einem der Ansprüche 1 bis 7, wobei die erste Datenleitung (171a) und die zweite Datenleitung (171b) dazu ausgestaltet sind, Datenspannungen mit Polaritäten, die sich voneinander unterscheiden, während eines Frames zu übertragen.

9. Anzeigevorrichtung (1), umfassend:
eine erste Pixelelektrode (191), die einen ersten Elektrodenteil (191a) mit einem ersten Spalt (Sa) und einen zweiten Elektrodenteil (191b) mit einem zweiten Spalt (Sb) aufweist; und
eine erste Datenleitung (171a) und eine zweite Datenleitung (171b), wobei die erste und die zweite Datenleitung (171a, 171b) in einer ersten Richtung zueinander benachbart sind, wobei die erste Pixelelektrode (191) die erste Datenleitung (171a) und die zweite Datenleitung (171b) überlappt,
wobei:
die erste Pixelelektrode ferner aufweist: einen Querstammteil (192), einen Längsstammteil (193), der den Querstammteil schneidet, und eine Mehrzahl von Zweigteilen (194), die sich von dem Querstammteil oder dem Längsstammteil aus erstrecken;
der erste Elektrodenteil (191a) auf einer Seite des Längsstammteils (193) angeordnet ist und der zweite Elektrodenteil (191b) auf der anderen Seite des Längsstammteils (193) angeordnet ist;
der erste Spalt und der zweite Spalt bezüglich des Längsstammteils symmetrisch angeordnet sind;
der erste Elektrodenteil und der erste Spalt die erste Datenleitung überlappen und der zweite Elektrodenteil und der zweite Spalt die zweite Datenleitung überlappen;
eine erste Fläche, definiert durch einen ersten Überlappungsbereich (Aa) zwischen dem ersten Spalt und der ersten Datenleitung, sich von einer zweiten Fläche, definiert durch einen zweiten Überlappungsbereich (Ab) zwischen dem zweiten Spalt und der zweiten Datenleitung, unterscheidet;
die erste Datenleitung (171a) elektrisch an die erste Pixelelektrode (191) angeschlossen ist;
**dadurch gekennzeichnet, dass** ein erster spitzer Winkel (α), definiert zwischen der Erstreckungsrichtung des ersten Spaltes und einer zweiten Richtung, die lotrecht zu der ersten Richtung verläuft, sich von einem zweiten spitzen Winkel (β), definiert zwischen der Erstreckungsrichtung des zweiten Spaltes und der zweiten Richtung, unterscheidet;
und
der erste spitze Winkel größer als der zweite spitze Winkel ist.

10. Anzeigevorrichtung (1) nach Anspruch 9, ferner umfassend:
eine zweite Pixelelektrode (1912), die der ersten Pixelelektrode in der zweiten Richtung, die die erste Richtung schneidet, benachbart ist,
wobei:
die zweite Datenleitung (171b) elektrisch an die zweite Pixelelektrode angeschlossen ist;
die zweite Pixelelektrode (1912) einen ersten Elektrodenteil (1912a) und einen zweiten Elektrodenteil (1912b) aufweist, die in der zweiten Richtung entsprechend auf den ersten Elektrodenteil und den zweiten Elektrodenteil der ersten Pixelelektrode ausgerichtet sind; und
in der zweiten Pixelelektrode der erste Elektrodenteil einen ersten Spalt (S2a) aufweist, der zweite Elektrodenteil einen zweiten Spalt (S2b) aufweist und ein dritter spitzer Winkel, definiert zwischen der Erstreckungsrichtung des zweiten Spaltes und der zweiten Richtung, größer ist als ein vierter spitzer Winkel, definiert zwischen der Erstreckungsrichtung des ersten Spaltes und der zweiten Richtung.

## Revendications

1. Dispositif d'affichage (1) comprenant :
une première électrode de pixel (191) comportant une première partie d'électrode (191a) ayant une première fente (Sa) et une deuxième partie d'électrode (191b) ayant une deuxième fente (Sb) ; et
une première ligne de données (171a) et une deuxième ligne de données (171b), les première et deuxième lignes de données (171a, 171b) étant adjacentes l'une à l'autre dans une première direction, dans lequel la première électrode de pixel (191) chevauche la première ligne de données (171a) et la deuxième ligne de données (171b),
dans lequel :
la première partie d'électrode (191a) et la première fente (Sa) chevauchent la première ligne de données (171a), et la deuxième partie d'électrode (191b) et la deuxième fente (Sb) chevauchent la deuxième ligne de données (171b) ;
une première zone définie par une première région de chevauchement (Aa) entre la première fente (Sa) et la première ligne de données (171a) est différente d'une deuxième zone définie par une deuxième région de chevauchement (Ab) entre la deuxième fente (Sb) et la deuxième ligne de données (171b) ;
la première ligne de données (171a) est électriquement connectée à la première électrode de pixel (191a) ; et
la première fente (Sa) a une première largeur (Wa) et la deuxième fente (Sb) a une deuxième largeur (Wb), dans lequel la première largeur (Wa) de la première fente (Sa) est inférieure à la deuxième largeur (Wb) de la deuxième fente (Sb),
**caractérisé en ce que** la première fente (Sa) comporte une première portion de fente ayant la première largeur (Wa2) et une deuxième portion de fente ayant une troisième largeur (Wa1) supérieure à la première largeur ; et
la première portion de fente chevauche la première ligne de données (171a) et la deuxième portion de fente ne chevauche pas la première ligne de données (171a).

2. Dispositif d'affichage (1) selon la revendication 1, comprenant en outre une deuxième électrode de pixel adjacente à la première électrode de pixel dans une deuxième direction coupant la première direction,
dans lequel la deuxième ligne de données (171b) est électriquement connectée à la deuxième électrode de pixel.

3. Dispositif d'affichage (1) selon la revendication 2, dans lequel :
la deuxième électrode de pixel comporte une première partie d'électrode et une deuxième partie d'électrode alignées respectivement avec la première partie d'électrode et la deuxième partie d'électrode de la première électrode de pixel dans la deuxième direction ; et
dans la deuxième électrode de pixel, la première partie d'électrode comporte une première fente, la deuxième partie d'électrode comporte une deuxième fente, et une largeur de la deuxième fente est inférieure à une largeur de la première fente.

4. Dispositif d'affichage (1) selon la revendication 2 ou 3, comprenant en outre une ligne de grille (121) s'étendant sensiblement dans la première direction,
dans lequel la ligne de grille comporte une première sous-ligne de grille (121a) électriquement connectée à la première électrode de pixel et une deuxième sous-ligne de grille (121b) électriquement connectée à la deuxième électrode de pixel.

5. Dispositif d'affichage (1) selon l'une quelconque des revendications 1 à 4, dans lequel :
la première électrode de pixel (191) comporte en outre une partie de tige transversale (192), une partie de tige longitudinale (193) coupant la partie de tige transversale, et une pluralité de parties de branche (194) s'étendant de la partie de tige transversale ou de la partie de tige longitudinale ; et
la première partie d'électrode (191a) est disposée d'un côté de la partie de tige longitudinale, et la deuxième partie d'électrode (191b) est disposée de l'autre côté de la partie de tige longitudinale.

6. Dispositif d'affichage (1) selon la revendication 5, dans lequel la première fente (Sa) et la deuxième fente (Sb) sont espacées d'un intervalle entre des parties de branche adjacentes de la pluralité de parties de branche (194).

7. Dispositif d'affichage (1) selon la revendication 5 ou 6, dans lequel la première fente (Sa) et la deuxième fente (Sb) sont disposées symétriquement par rapport à la partie de tige longitudinale (193).

8. Dispositif d'affichage (1) selon l'une quelconque des revendications 1 à 7, dans lequel la première ligne de données (171a) et la deuxième ligne de données (171b) sont configurées pour transmettre des tensions de données ayant des polarités différentes l'une de l'autre pendant une trame.

9. Dispositif d'affichage (1) comprenant :
une première électrode de pixel (191) comportant une première partie d'électrode (191a) ayant une première fente (Sa) et une deuxième partie d'électrode (191b) ayant une deuxième fente (Sb) ; et
une première ligne de données (171a) et une deuxième ligne de données (171b), les première et deuxième lignes de données (171a, 171b) étant adjacentes l'une à l'autre dans une première direction, dans lequel la première électrode de pixel (191) chevauche la première ligne de données (171a) et la deuxième ligne de données (171b),
dans lequel :
la première électrode de pixel comporte en outre une partie de tige transversale (192), une partie de tige longitudinale (193) coupant la partie de tige transversale, et une pluralité de parties de branche (194) s'étendant de la partie de tige transversale ou de la partie de tige longitudinale ;
la première partie d'électrode (191a) est disposée d'un côté de la partie de tige longitudinale (193), et la deuxième partie d'électrode (191b) est disposée de l'autre côté de la partie de tige longitudinale (193) ;
la première fente et la deuxième fente sont disposées symétriquement par rapport à la partie de tige longitudinale ;
la première partie d'électrode et la première fente chevauchent la première ligne de données, et la deuxième partie d'électrode et la deuxième fente chevauchent la deuxième ligne de données ;
une première zone définie par une première région de chevauchement (Aa) entre la première fente et la première ligne de données est différente d'une deuxième zone définie par une deuxième région de chevauchement (Ab) entre la deuxième fente et la deuxième ligne de données ;
la première ligne de données (171a) est électriquement connectée à la première électrode de pixel (191) ;
**caractérisé en ce que**
un premier angle aigu (α) défini entre la direction d'extension de la première fente et une deuxième direction perpendiculaire à la première direction est différent d'un deuxième angle aigu (β) défini entre la direction d'extension de la deuxième fente et la deuxième direction ; et
le premier angle aigu est supérieur au deuxième angle aigu.

10. Dispositif d'affichage (1) selon la revendication 9, comprenant en outre :
une deuxième électrode de pixel (1912) adjacente à la première électrode de pixel dans la deuxième direction coupant la première direction,
dans lequel :
la deuxième ligne de données (171b) est électriquement connectée à la deuxième électrode de pixel ;
la deuxième électrode de pixel (1912) comporte une première partie d'électrode (1912a) et une deuxième partie d'électrode (1912b) respectivement alignées avec la première partie d'électrode et la deuxième partie d'électrode de la première électrode de pixel dans la deuxième direction ; et
dans la deuxième électrode de pixel, la première partie d'électrode comporte une première fente (S2a), la deuxième partie d'électrode comporte une deuxième fente (S2b), et un troisième angle aigu défini entre la direction d'extension de la deuxième fente et la deuxième direction est supérieur à un quatrième angle aigu défini entre la direction d'extension de la première fente et la deuxième direction.
